Europäisches Patentamt

European Patent Office

Office européen des brevets

(19)

(11) Publication number:

**0 256 860**
**A2**

(12) **EUROPEAN PATENT APPLICATION**

(21) Application number: **87307172.4**

(22) Date of filing: **13.08.87**

(51) Int. Cl.⁴: **H 04 N 5/44**

(30) Priority: **14.08.86 JP 190995/86**
**22.11.86 JP 279217/86**

(43) Date of publication of application:
**24.02.88 Bulletin 88/08**

(84) Designated Contracting States: **DE FR GB NL**

(71) Applicant: **SONY CORPORATION**
**7-35 Kitashinagawa 6-Chome Shinagawa-ku**
**Tokyo 141 (JP)**

(72) Inventor: **Tanaka, Yutaka c/o Patents Division**
**Sony Corporation 6-7-35 Kitashinagawa**
**Shinagawa-ku Tokyo 141 (JP)**

**Asakura, Nobuyuki c/o Patents Division**
**Sony Corporation 6-7-35 Kitashinagawa**
**Shinagawa-ku Tokyo 141 (JP)**

(74) Representative: **Thomas, Christopher Hugo et al**
**D Young & Co 10 Staple Inn**
**London WC1V 7RD (GB)**

(54) **Television signal processing.**

(57) A television signal processing system is arranged alternately to transmit television signals corresponding to a plurality of sequential scanning lines in the vertical direction at every field in the form of a single block or a plurality of blocks, while to maintain compatibility with the existing standard television system the block scanning can easily be converted into sequential scanning with line frequencies doubled.

FIG. 5

EP 0 256 860 A2

**Description**

TELEVISION SIGNAL PROCESSING

This invention relates to television signal processing systems and to methods of processing television signals. The invention is particularly concerned with improving the vertical resolution of a reproduced picture.

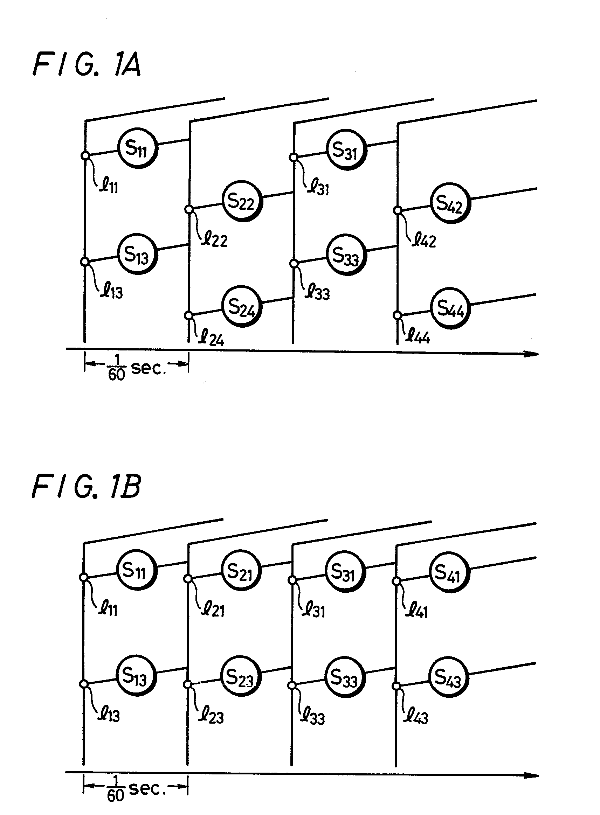

In the existing NTSC system, as shown in Figure 1A of the accompanying drawings, when picking up an image, only odd-numbered scanning lines such as 111, 113, ... are scanned during the odd field periods, while only even-numbered scanning lines such as 122, 124, ... are scanned during the even field periods. As a result, 2:1 interlaced scanning for one frame of 525 scanning lines is effected in a pair of odd and even field periods, thereby sequentially to transmit television signals S11, S13, ...; S22, S24, ... corresponding to picture information on the respective scanning lines. With this scanning technique, the transmission band can be reduced by about $1/2$.

There is, however, an interval of 1/30 second between when picture information on a particular scanning line, for example 113 is displayed on the picture screen of the picture tube and when picture information on the scananing line 133 is displayed at the same position of the picture screen. As a result, picture information displayed at the intermediate position therebetween, that is on the two adjacent scanning lines 122 and 124 interfere with the former from a viewer's point of view, thus causing a so-called inter-line flicker which causes the vertical resolution of the reproduced picture to be lowered.

This inter-line flicker is more conspicuous on the picture screen of modern television receivers in which the brightness of the picture tube is becoming higher.

In order to avoid the vertical resolution of the reproduced picture from being lowered by the inter-line flicker, as shown in Figure 1B of the accompanying drawings, the interlaced scanning may be carried out such that picture information of, for example, only the odd-numbered scanning lines 111, 113, ... are transmitted at every field. However, as the picture information of the even-numbered scanning lines 122, 124, ... is not transmitted, vertical resolution of the reproduced picture is necessarily low.

Moreover, if the scanning frequency of the interlaced scanning system is mode 31.5 kHz, which is twice the scanning frequency of 15.75 kHz of the existing system, and picture information of all 525 scanning lines is displayed at every 1/60 second, the inter-line flicker can be removed and the vertical resolution of the reproduced picture can be improved. However, this requires a transmission band twice as wide as that of the existing system, and moreover this system is not compatible with the existing television transmitting system.

Therefore, in order to improve the vertical resolution of the reproduced picture, an improved definition television (IDTV) in which the existing broadcasting system is not altered, and the interlaced scanning is carried out at the television receiver, and an extended definition television (EDTV) in which while the compatibility with the existing broadcasting system is maintained, the broadcasting system is improved and altered have been studied.

The fundamental technology common to IDTV and EDTV is based upon the sequential-scanning/double-scanning display method in which signals corresponding to the scanning lines whose signals are not transmitted are interpolated at the receiver. Accordingly, in the case of a still picture, complete interpolation of a signal is possible.

However, in case of a real a moving picture, that is a live moving picture, the picture quality particularly of the outline portion of the reproduced picture is deteriorated and the smooth motion of the moving picture is lost. In order to improve the picture quality, in carrying out the sequential scanning, interpolation between the fields can be carried out for the still picture portions whereas interpolation within the field can be carried out for the moving picture portions. In this case, it is necessary to provide a judging circuit for discriminating between the still picture portions and the moving picture portions.

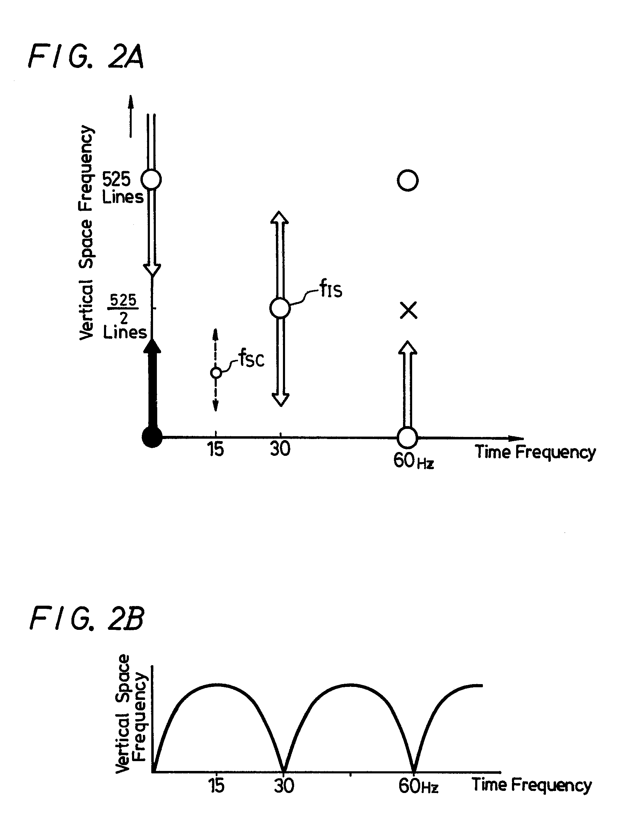

Since the interlaced scanning can be regarded as a two-dimensional sampling in the time-to-vertical frequency domain, if a picture to be reproduced is a still picture, the scanning frequency fIS and the higher harmonic wave thereof are as shown in Figure 2A of the accompanying drawings. For this reason, a previously proposed moving picture judging circuit basically uses a vertical comb filter having the characteristic shown in Figure 2B, which judges the picture to be reproduced to be a still picture when the frame difference output is zero. However, with a judging circuit based on the frame difference output, it is not possible to detect a moving picture with a frequency of 30 Hz (the frame frequency). Even when a field difference output is used to detect a moving picture, in the case of the interlaced scanning system, no sampling point originally exists at the position X in Figure 2A, so that the moving picture cannot be judged by the field difference output.

One form of EDTV is a system called 'Ivision' disclosed in The Journal of the Institute of Television Engineers of Japan, No 21, Vol 9, (Oct 1985).

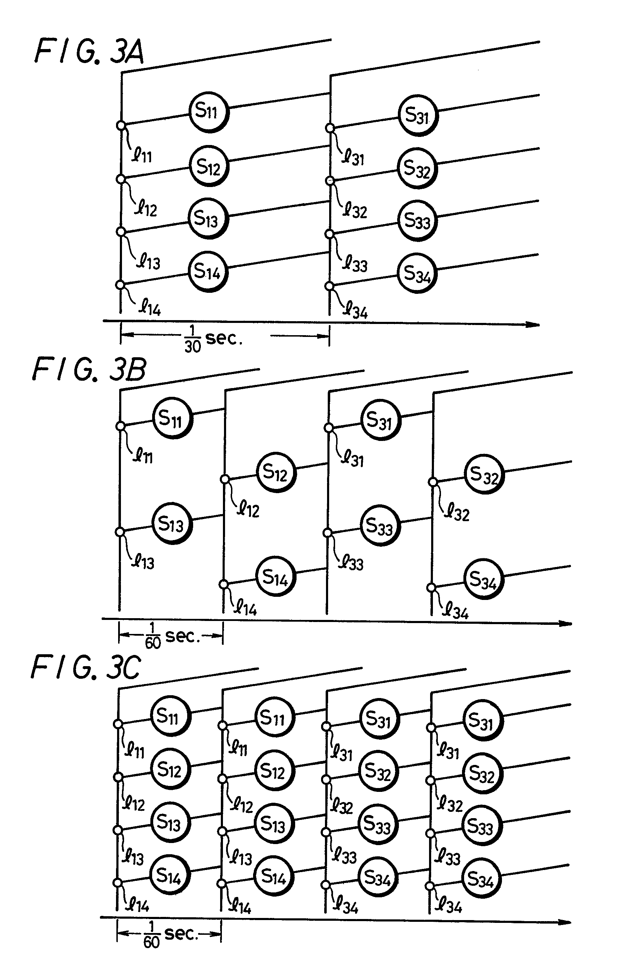

In the 'Ivision' system, as shown in Figure 3A of the accompanying drawings, an image is picked up by sequential scanning of 525 lines during one frame period of 1/30 second and then, as shown in Figure 3B of the accompanying drawings, the television signal is divided into television signals S11, S13, ... corresponding to the odd-numbered scanning lines 111, 113, ... and television signals S12, S14, ... corresponding to the even-numbered scanning lines 112, 114, ..., or is converted into an interlaced scanning signal substantially the same as a signal of the NTSC system, and then broadcast. In the existing television receiver, this interlaced scanning signal is displayed as it is, whereas in the television receiver of the 'Ivision' system, as shown in Figure 3C of the accompanying drawings, television signals which are not transmitted (for example, television signals S12, S14, ... in the first field and television signals S11, S13, ... in the second field, etc) are interpolated within the frame. Thus the television signal of the same frame is displaced twice during each period of 1/30 second. With this system, on the basis of the simple interpolation of the scanning lines, the vertical resolution of the reproduced picture can be improved by a relatively simple circuit arrangement.

However, with the 'Ivision' system, the picture is picked up by interlaced scanning at every 1/30 second, so that both television receivers of the existing television system and television receivers of the 'Ivision' system have the problem of deteriorated picture quality due to jerky motion of a moving picture.

According to the present invention there is provided a television signal processing system comprising: means for receiving a television signal having a plurality of scanning lines; characterized by: means for composing a predetermined number of scanning lines in one field and transmitting the composed output as one scanning line of said one field; and means for dividing said predetermined number of scanning lines in another field corresponding to said predetermined number of scanning lines in said one field into a plurality of groups and transmitting outputs from said groups as a plurality of scanning lines of said other field.

According to the present invention there is also provided a method of processing a television signal, the method comprising the steps of: receiving a television signal having a plurality of scanning lines; composing a predetermined number of scanning lines in one field and transmitting the composed output as one scanning line of said one field; and dividing said predetermined number of scanning lines in another field corresponding to said predetermined number of scanning lines in said one field into a plurality of groups and transmitting outputs from said groups as a plurality of scanning lines of said other field.

The invention will now be described by way of example with reference to the accompanying drawings, throughout which like parts are referred to by like references, and in which:

Figures 1A and 1B, 3A, 3B and 3C, and 4A and 4B are schematic representations of television signals;

Figures 2A and 2B are graphs of television signals;

Figure 5 is a block diagram of an embodiment of television signal processing system according to the present invention;

Figure 6 is a block diagram of a portion of the embodiment of Figure 5;

Figures 7A to 7E are timing charts used to explain the operation of the portion shown in Figure 6;

Figure 8 is a block diagram of another portion of the embodiment of Figure 5;

Figures 9A to 9N are timing charts used to explain the operation of the portion shown in Figure 8;

Figure 10 is a block diagram of a further portion of the embodiment of Figure 5;

Figures 11A and 11B and 13 are conceptual diagrams of television signals;

Figure 12 is a block diagram showing another embodiment of television signal processing system according to the present invention;

Figure 14 is a block diagram showing a portion of a further embodiment of television signal processing system according to the present invention;

Figure 15 is a block diagram showing a portion of a scan converter circuit used in the embodiment of Figure 14.

Figures 16A to 16K are timing charts used to explain the operation of the portion shown in Figure 14;

Figure 17 is a block diagram showing a portion of a yet further embodiment of television signal processing system according to the present invention;

Figures 18 and 19 are block diagrams showing other portions of the embodiment of Figure 17;

Figures 20, 21 and 22 are conceptual diagrams used to explain the operation of the portion shown in Figure 19; and

Figure 23 is a conceptual diagram showing a transmitted signal.

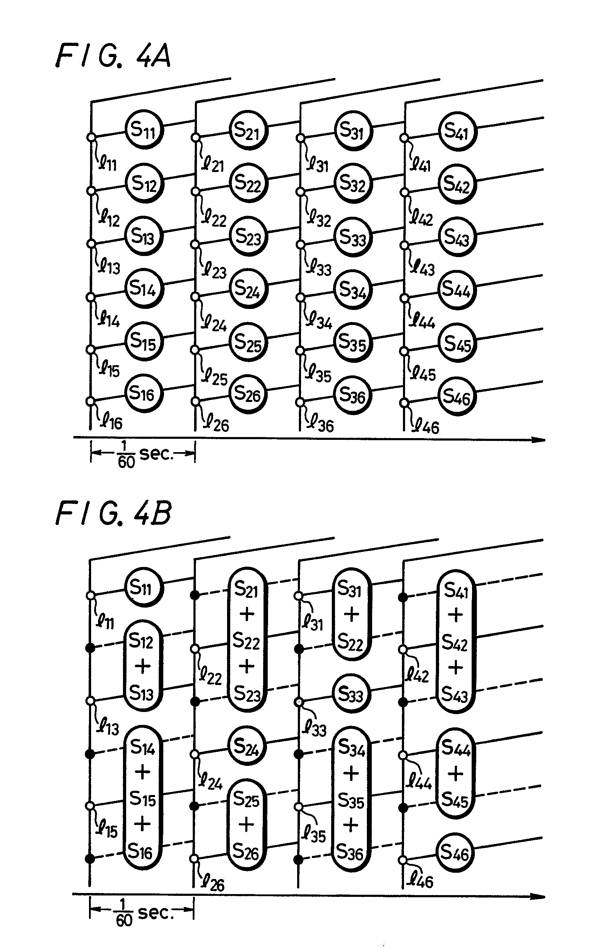

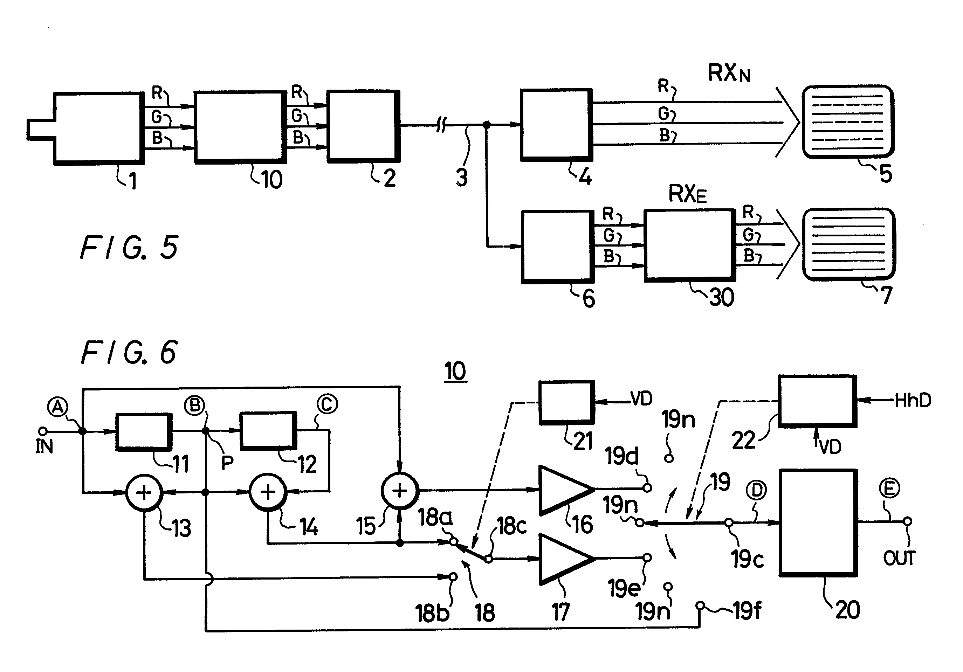

Initially, the generation of a signal to be transmitted by an embodiment of television signal processing system according to the present invention will be described with reference to Figures 4 and 5.

Referring to Figure 5, there is shown a television camera 1 of what may be called a sequentially-scanning type. The camera 1 picks up an image with 525 scanning lines every 1/60 second, the television signals corresponding to respective scanning lines being derived as shown in Figure 4A. The output from the camera 1 is supplied to a scan converter circuit 10 located at the transmitting side, in which, as shown in Figure 4B, it is converted to a television signal of a block scanning system corresponding to the interlaced scanning system, so as thereby to become compatible with the existing television signal transmitting system. While this scan conversion will be explained in greater detail below, during the odd field period, the television signal is transmitted with a timing corresponding to the odd-numbered scanning lines, while during the even field period, the television signal is transmitted with a timing corresponding to the even-numbered scanning lines. In this case, television signals of one block corresponding to a plurality of consecutive scanning lines in the vertical direction, for example, television signals S11, S12, S13 and television signals S21, S22, S23 are divided such that in the first field period they are divided into two groups comprising television signal S11 and television signal S12 + S13 and then transmitted at timings of different scanning lines 111 and 113 as shown in Figure 4B, while in the second field period, television signals S21, S22 and S23 are composed as a single group of a television signal S21 + S22 + S23 and then transmitted at the timing of the single scanning line 122.

Moreover, in the first field period, television signals S14, S15 and S16 are composed as a single group and then transmitted at the timing of the single scanning line 115, whereas in the second field period, television signal S24 and a television signal S25 + S26 are grouped and then transmitted at the timings of different scanning lines 124 and 126.

Similarly as described above, both in the third and fourth field periods, as shown in Figure 4B, television signals corresponding to three scanning lines are divided into two groups or composed into a single group of the television signal and then transmitted. It will be clear from Figure 4B that the pattern of dividing and composing the television signals is repeated cyclically. This pattern is repeated within each field and also repeated cyclically at every four fields.

The output from the scan converter circuit 10 is supplied to an NTSC encoder 2, in which it is converted to a television signal according to the NTSC system. The NTSC television signal from the NTSC encoder 2 is supplied through a broadcasting system 3 to an existing (that is an ordinary known) television receiver RXN and a television receiver RXE which corresponds to the television signal transmitting system of the present invention.

In the existing receiver RXN, television signals of three primary colours decoded by an NTSC decoder 4 are supplied to a picture tube 5 and thereby the television signal corresponding to the interlaced scanning system as shown in Figure 4B is reproduced on the picture screen.

In this case, a sharp reproduced picture corresponding to a single scanning line and a slightly-blurred reproduced picture corresponding to two or three scanning lines alternately appear on the same picture screen in the vertical direction and also in the field direction (time direction). For this reason, similarly to the case of a colour sub-carrier, the blur of the reproduced picture is prevented from becoming conspicuous by the integration effect of a viewer's sight, and at the same time, the line flicker is decreased.

In the receiver RXE corresponding to the television signal transmitting system of the present invention, the television signals of three primary colour decoded by an NTSC decoder 6 are supplied to a scan converter circuit 30, which will be described later, in which they are converted to sequentially-scanning line signals which are supplied to a double-scanning picture tube 7. Therefore, the television signals formed by sequential double-scanning as shown in Figure 4A are displayed on the picture screen of the picture tube 7.

If the television signal formed by the television signal transmitting system of the present invention is transmitted without passing through the broadcasting system 3, the NTSC encoder 2 and the NTSC decoders 4 and 6 will be removed. Moreover, if the camera 1 has a solid state image pick-up device, it is possible immediately to obtain the television signals shown in Figure 4B by controlling the device, and the scan converter circuit 10 can then be omitted.

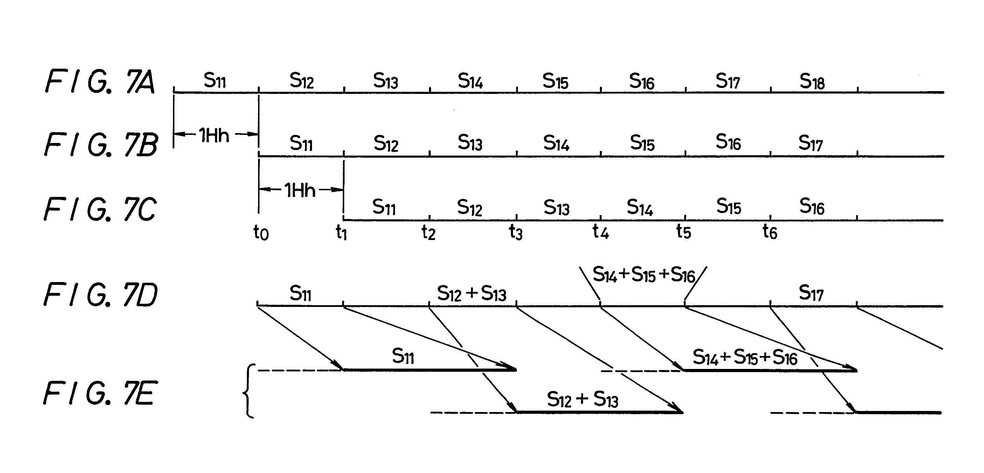

The way of converting the sequential scanning to block scanning will be described next with reference to Figures 6 and 7.

Figure 6 illustrates the circuit arrangement of the scan converter circuit 10 (Figure 5) used in such sequential scanning/block scanning conversion.

Delay lines 11 and 12 the delay times of which are one horizontal scanning period Hh ($=$H/2) of the double-scanning system are connected in series to an input terminal IN. The input and output signals of the first delay line 11 are supplied to a first adder 13, while the input and output signals of the second delay line 12 are supplied to a second adder 14. The input signal to the first delay line 11 and the output signal from the second adder 14 are supplied to a third adder 15.

First and second attenuators 16 and 17 have attenuation factors of 1/3 and 1/2 respectively. The first attenuator 16 directly receives the output from the third adder 15. The output from the second adder 14 is supplied to a first fixed contact 18a of a change-over switch 18 while the output from the first adder 13 is supplied to a second fixed contact 18b of the change-over switch 18. The output at a movable contact 18c of the change-over switch 18 is supplied to the second attenuator 17. The outputs from the first and second attenuators 16 and 17 are supplied to fixed contacts 19d and 19e of a step-switch 19, whereas the output from the first delay line 11 is supplied to a fixed contact 19f of the step-switch 19. An output developed at a movable contact 19c of the step-switch is supplied to a time-base expander circuit 20. The step-switch 19 also has non-contact fixed contacts 19n between two adjacent fixed contacts of the three fixed contacts 19d, 19e and 19f.

A one-quarter frequency divider 21 receives a vertical drive pulse VD, and under the control of the output from the frequency divider 21, the movable contact 18c of the switch 18 engages the first fixed contact 18a during the first and second field periods as illustrated in Figure 6 and engages the second fixed contact 18b during the third and fourth field periods. A control circuit 22 receives the vertical drive pulse VD and a horizontal drive pulse HhD of the double-scanning system. Then, under control of the output from the control circuit 22, the movable contact 19c of the step-switch 19 is changed in position by one step in response to each horizontal drive pulse HhD, and the moving direction of the movable contact 19c is determined at every field.

The operation of the scan converter circuit 10 of Figure 6 will now be described.

During the first field period, television signal A, B and C appearing at the input side of the delay line 11, at a junction P between the delay lines 11 and 12, and at the output side of the delay line 12, each have a time difference of one horizontal scanning period 1Hh of the double-scanning line-frequency as shown in Figures 7A, 7B and 7C.

Since the switch 18 is in the illustrated state in Figure 6 during the first field period as described above, the second attenuator 17 receives the output of the second adder 14, or a sum $\underline{B}+\underline{C}$ of the television signals developed at the input and output sides of the second delay line 12. The first attenuator 16 receives the output of the third adder 15, or a sum $\underline{A}+\underline{B}+\underline{C}$ of the television signals respectively developed at the input side of the first delay line 11, the junction $\overline{P}$ and $\overline{the}$ output side of the second delay line 12. The step-switch 19 directly receives at its fixed contact 19f the television signal $\underline{B}$ developed at the junction P and also receives at its fixed contacts 19e and 19d the sum signals $\underline{B}+\underline{C}$ and $\underline{A}+\overline{\underline{B}}+\underline{C}$, which were adjusted in level by the second and first attenuators 17 and 16, respectively.

Let us now examine the first, third and fifth horizontal scanning periods which start from time points t0, t2 and t4 of the television signal $\underline{B}$ developed at the junction P. Then, there exist television signals S11, S13 and S15 which correspond to the first, third and fifth scanning lines, respectively. While, within the scanning periods starting from the time points t2 and t4 of the signal $\underline{C}$, there exist television signals S12 and S14 which correspond to the second and fourth scanning lines. A television signal S16 corresponding to the sixth scanning line exists within the horizontal scanning period starting from the time point t4 of the signal $\overline{A}$.

Accordingly, the step-switch 19 receives at its fixed contact 19f television signal S11 corresponding to the first scanning line during one horizontal scanning period starting from the time point t0 at which television signal S11 corresponding to the first scanning line is supplied to the junction P between the first and second delay lines 11 and 12. Then, the step-switch 19 receives at its fixed contact 19e television signals S12 and S13 corresponding to the second and third scanning lines during one horizontal scanning period starting from the time point t2, and also receives at its fixed contact 19d television signals S14, S15 and S16 corresponding to the fourth, fifth and sixth scanning lines during one hoizontal scanning period starting from the time point t4.

Since the television signals supplied to the fixed contacts 19d, 19e and 19f of the switch 19, and the timing relationships thereof are as described above, the movable contact 19c of the switch 19 engages its fixed contact 19f at time point t0. Thereafter, each time the double-scanning horizontal drive pulse HhD is supplied to the control circuit 22, the movable contact 19c of the switch 19 is changed in position by one step in the clockwise direction. Thus, the step-switch 19 intermittently generates the television signals, which are divided or composed as shown in Figure 4B, at every other one horizontal scanning period.

In the time-base expander circuit 20, as shown by a dashed line in Figure 7E, the television signal supplied thereto is immediately written in a memory (not shown) and read out therefrom during a time period twice that necessary for the writing thereof, and thereby converted to an interlaced television signal which is continuous in time.

Substantially similar signal processing is carried out during the second field period. However, as shown in Figure 4B, the timing at which television signals corresponding to the respective scanning lines are composed is different from that of the first field period, so that at time point t1 (Figure 7) when television signal S21 corresponding to the first scanning line arrives at the output side of the delay line 12, the movable contact 19c of the step-switch 19 engages its fixed contact 19d which is supplied with the output from the first attenuator 16. Thereafter, the movable contact 19c of the step-switch 19 is moved by one step in the clockwise direction in response to each horizontal drive pulse HhD.

During the third and fourth field periods, the switch 18 is in the other position shown in Figure 6 to permit the sum $\underline{A}+\underline{B}$ of the signals developed at the input and output sides of the first delay line 11 to be supplied to the second attenuator 17.

During the third field period, at time point t1 when television signal S31 corresponding to the first scanning line reaches the junction P between the delay lines 11 and 12 (Figure 7), the movable contact 19c of the step-switch 19 engages its fixed contact 19e, which is supplied with the output from the second attenuator 17. Then, the movable contact 19c of the step-switch 19 is moved by one step in the counter-clockwise direction at every horizontal drive pulse HhD.

During the fourth field period, at time point t1 when television signal S41 corresponding to the first scanning line reaches the output side of the delay line 12 (Figure 7), the movable contact 19c of the step-switch 19 engages the fixed contact 19d, which is supplied with the output from the first attenuator 16. Thereafter, the movable contact 19c of the step-switch 19 is moved by one step in the counter-clockwise direction at every horizontal drive pulse HhD.

The states of the switches 18 and 19 are shown in Table 1.

Table 1

| Field | State of switch 18 | Step-switch 19 | | |
| | | Initial time point | State | Moving direction |
| --- | --- | --- | --- | --- |
| 1 | Engages contact 18a | t0 | Engages contact 19f | clockwise |
| 2 | Engages contact 18a | t1 | Engages contact 19d | clockwise |
| 3 | Engages contact 18b | t0 | Engages contact 19e | counter-clockwise |
| 4 | Engages contact 18b | t1 | Engages contact 19d | counter-clockwise |

This scan converting processing is repeated cyclically at every four fields thereby to supply a block scanning type transmitting signal from an output terminal OUT of the scan converter circuit 10 to the broadcasting system 3. In this case, the phase of the colour sub-carrier is reset at the beginning of the (4N + 1)th field by the rise of the output from the frequency-divider 21, where N is an integer.

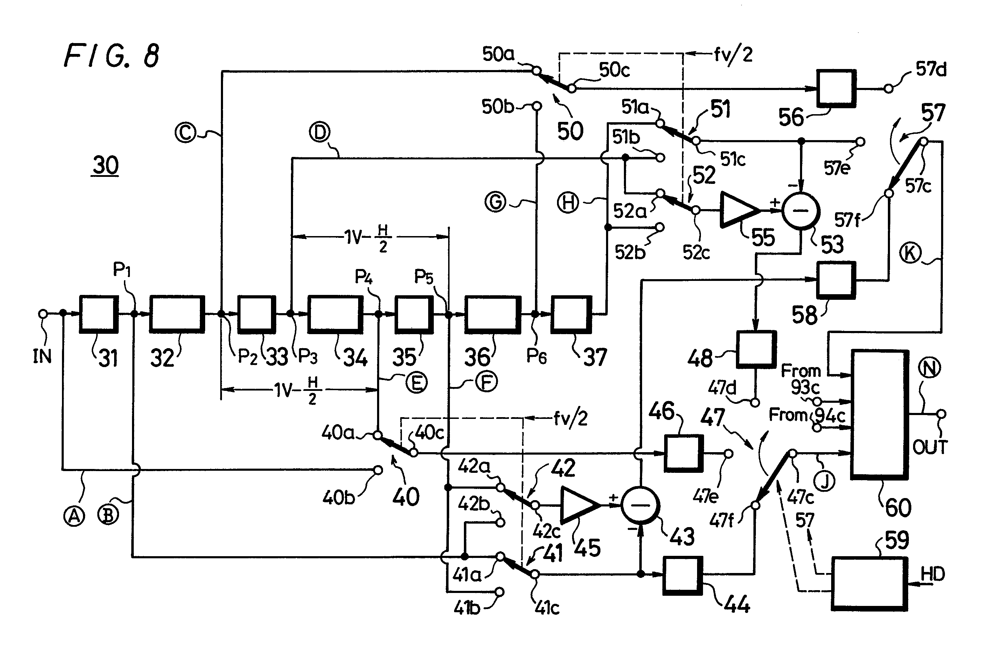

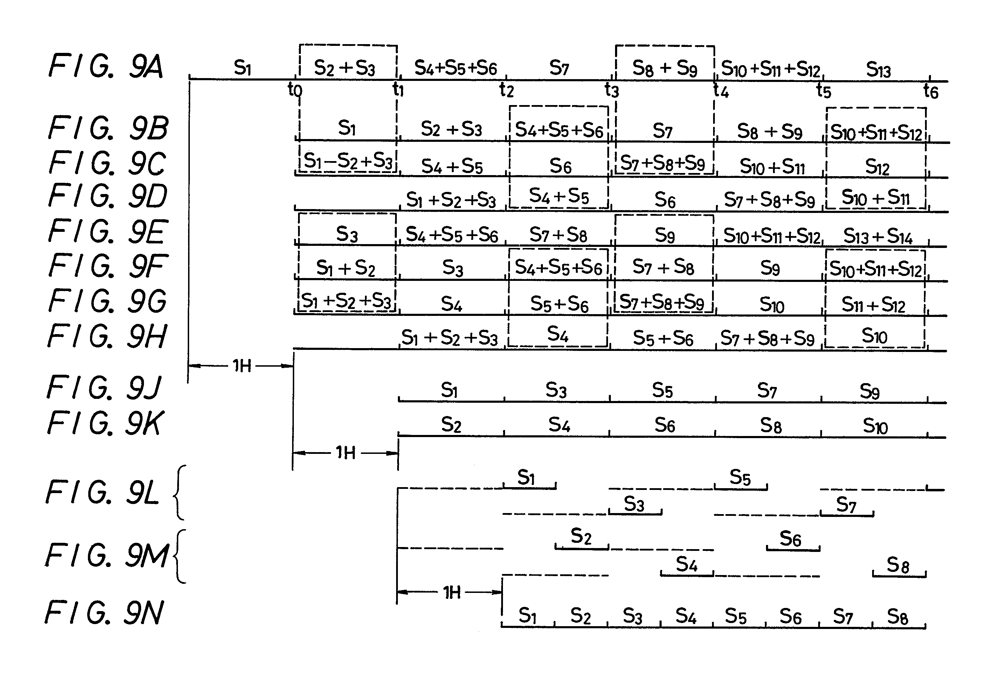

Conversion of the block scanning to sequential scanning will be described next with reference to Figures 8 and 9.

Figure 8 illustrates a circuit arrangement of the scan converting circuit 30 (Figure 5) for carrying out the block scanning/sequential scanning conversion.

Referring to Figure 8, there are provided 1H delay lines 31, 33, 35 and 37, 262H delay lines 32 and 36, and a 261H delay line 34, respectively, where H is one horizontal period. The block scanning television signal supplied to an input terminal IN is supplied to the 1H delay line 31 of the first stage. The respective delay lines 31 to 37 are connected in series sequentially. If a junction between the delay lines 31 and 32 is P1 and junctions between the adjacent delay lines of those 32 to 37 are respectively P2, P3, P4, P5 and P6, the delay times between the input and output of the 262H delay lines 32 and 36, that is, the delay times between the junctions P1 and P2 and between the junctions P5 and P6 become (1V-H/2) and the delay times between the junctions P2 and P4 and between the junctions P3 and P5 become (1V-H/2).

There are provided a set of change-over switches 40, 41 and 42, and another set of change-over switches 50, 51 and 52 which are changed in position in ganged relation every two fields. The set of switches 40 to 42 are positioned as illustrated in Figure 8 during the first and second field periods and positioned oppositely during the third and fourth field periods. Whereas, the other set of switches 50 to 52 are positioned as illustrated during the fourth and first field periods and positioned oppositely during the second and third field periods.

One fixed contact 40a of the switch 40 is connected to the junction P4, whereas the other fixed contact 40b is connected to the input terminal IN. One fixed contact 41a of the switch 41 and the other fixed contact 42b of the switch 42 are connected together to the junction P1, whereas one fixed contact 42a of the switch 42 and the other fixed contact 41b of the switch 41 are connected together to the junction P5. The output developed at the movable contact 41c of the switch 41 is supplied commonly to a subtractor 43 and a 1H delay line 44, and the output developed at the movable contact 42c of the switch 42 is supplied through an amplifier 45 to the subtractor 43. The output developed at the movable contact 40c of the switch 40 is supplied through a 2H delay line 46 to a second fixed contact 47e of the switch 47. The output of the 1H delay line 44 is supplied to a third fixed contact 47f of the switch 47.

A first fixed contact 50a of the switch 50 is connected to the junction P2, whereas a second fixed contact 50b of the switch 50 is connected to the junction P6. A first fixed contact 51a of the switch 51 and a second fixed contact 52b of the switch 52 are both connected together to the output side of the 1H delay line 37 whereas a first fixed contact 52a of the switch 52 and a second fixed contact 51b of the switch 51 are connected together to the junction P3. The output developed at a movable contact 51c of the switch 51 is supplied commonly to a subtractor 53 and a second fixed contact 57e of a switch 57. The output developed at a movable contact 52c of the switch 52 is supplied through an amplifier 55 to the subtractor 53. The output developed at a movable contact 50c of the switch 50 is supplied through a 1H delay line 56 to a first fixed contact 57d of the switch 57.

The output from the subtractor 53 is supplied through a 1H delay line 48 to a first fixed contact 47d of a switch 47. The output from the subtractor 43 is supplied through a 1H delay line 58 to a third fixed contact 57f of the switch 57. Under the control of a control signal from a control circuit 59, movable contacts 47c and 57c of the switches 47 and 57 are respectively moved by one step in the clockwise direction at every horizontal drive pulse HD. The outputs developed at the movable contacts 47c and 57c of the switches 47 and 57 are supplied to a time-base converter circuit 60 and the output from the time-base converter circuit 60 is supplied to an output terminal OUT.

The operation of the circuit shown in Figure 8 will now be described.

In the case of a still picture, television signals corresponding to the same scanning lines in the respective field periods become the same, so that the suffix numbers added to the respective television signals S11 and S46 of Figure 4B and relating to different field periods can be omitted.

Now, let us consider the signals S1 to S3 of the upper one block (odd-numbered block). In the case of the odd field period, two television signals S1 and S3 corresponding to the single scanning line exist independently up to the preceding two field periods whereas in the case of the even field period, they exist independently up to the three field periods, so that the remaining one television signal S2 can be separated therefrom easily.

In like manner, let us consider television signals S4 to S6 of the lower one block (even-numbered block). In the case of the odd field period, two television signals S4 and S6 corresponding to the same scanning line exist independently in the range of up to the preceding three field periods, whereas in the case of an even field period, they exist independently in the range up to the preceding two field periods, so that the remaining one television signal S5 can easily be separated therefrom.

During the first field period, the switches 40 to 42 and 50 to 52 are positioned in the illustrated states as earlier described.

When a series of signal A shown in Figure 9A is supplied from the input terminal IN to the scan converting circuit 30, as shown in Figure 9B, at time point t0 when television signal S1 corresponding to the first scanning line reaches the junction P1 between the delay lines 31 and 32, television signal S3 and television signal S1 + S2 of two fields before arrive at the junctions P4 and P5 as shown in Figures 9E and 9F, respectively.

Television signal S1 developed at the junction P1 is supplied through the switch 41 to the subtractor 43, and is also supplied to the delay line 44, in which it is delayed by 1H. Television signal S3 at the junction P4 is supplied through the switch 40 to the delay line 46, in which it is delayed by 2H. Television signal S1 + S2 at the junction P5 is supplied through the switch 42 to the amplifier 45. The amplification factor of the amplifier 45 is selected to be 2 in response to the attenuation factor 1/2 of the second attenuator 17 in Figure 6. The subtractor 43 subtracts television signal S1 of the switch 41 from the television signal S1 + S2 of the amplifier 45 to separate television signal S2. The separated television signal S2 is supplied to the delay line 58, in which it is delayed by 1H.

Accordingly, television signals S1 and S2 arrive at the third fixed contacts 47f and 57f of the switches 47 and 57 at time point t1, which is delayed from the time point t0 by 1H as shown in Figures 9J and 9K. At time point t2 delayed from the time point t1 by 1H, television signal S3 arrives at the second fixed contact 47e of the switch 47.

At time point t2, as shown in Figures 9C and 9D, television signals S6 and S4 + S5 of one field before respectively reach the junction P2 and P3, and television signal S4 of three fields before appears at the output side of the 1H delay line 37 as shown in Figure 9H.

Television signal S4 developed at the output side of the 1H delay line 37 is supplied through the switch 51 to the subtractor 53, and is also supplied to the second fixed contact 57e of the switch 57. Television signal S6 developed at the junction P2 is supplied through the switch 50 to the 1H delay line 56, in which it is delayed by 1H. Television signal S4 + S5 at the junction P3 is supplied through the switch 52 to the amplifier 55. The amplification factor of the amplifier 55 is selected to be 2 corresponding to the attenuation factor 1/2 of the second attenuator 17 of Figure 6. The subtractor 53 subtracts television signal S4 of the switch 51 from television signal S4 + S5 of the amplifier 55 thereby to separate television signal S5 which is supplied to the 1H delay line 48 and thereby delayed by 1H.

As shown in Figures 9J and 9K, television signals S5 and S6 arrive at the first fixed contacts 47d and 57d of the switches 47 and 57 respectively at time point t3 which is delayed from time point t2 by 1H. Also, similarly to above, television signal S4 reaches the second fixed contact 57e of the switch 57.

As will be clear from Figures 9B to 9H, thereafter, similar block scanning signals appear at the junctions P1 to P6 and at the output side of the 1H delay line 37 every 3H periods and similar operations are repeated.

The movable contacts 47c and 57c of both the switches 47 and 57 are respectively positioned as in Figure 8 at time point t2, and then the movable contacts 47c and 57c are moved by one step in the clockwise direction at every horizontal drive pulse HD. As a result, interlaced scanning television signals S1, S3, S5, ... corresponding to the odd-numbered scanning lines of the sequential double-scanning system as shown in Figure 9J are sequentially supplied to the time-base converter circuit 60 from the switch 47. At the same time, interpolated television signals S2, S4, S6, ... corresponding to the even-numbered scanning lines as shown in Figure 9K are sequentially supplied to the time-base converter circuit 60 from the switch 57.

In the time-base converter circuit 60, as shown in Figure 9L, television signals S1, S3, S5, ... corresponding to the odd-numbered scanning lines and shown in Figure 9J are sequentially written in a memory (not shown) and then read out therefrom at a reading period 1/2 the writing period just after they are written in the memory. As shown in Figure 9M, television signals S2, S4, S6, ... corresponding to the even-numbered scanning lines and shown in Figure 9K are sequentially written in a memory (not shown) and then read out therefrom at a reading period 1/2 the writing period with a delay of H/2 immediately after the completion of the writing operation. As described above, television signals S1, S3, S5, ... corresponding to the odd-numbered scanning lines and television signals S2, S4, S6, ... corresponding to the even-numbered scanning lines, each of which is time-base compressed, are generated from the time-base converter circuit 60 alternately, and thereby sequential double-scananing signals shown in Figure 9N are reproduced at its output terminal OUT.

During the second field period, one set of switches 40 to 42 are connected as in Figure 8 while the other set of switches 50 to 52 are connected oppositely to what is shown. Also, as described before, the relationship between the odd-numbered block and the even-numbered block is exchanged in the odd field period and the even field period.

For this reason, during the second field period, television signal S4 of the second block corresponds to television signal S1 of the first block of the afore-mentioned first field period and is made a reference signal. At the time point when television signal S4 reaches the junction P1, television signal S6 of two fields before reaches the junction P4 and television signal S4+S5 of two fields before reaches the junction P5. At the time point when television signal S7 of one field before reaches the junction P3, television signal S9 and television signal S7+S8 of two fields before reach the junction P6 and the output side of the 1H delay line 37, respectively. By an operation similar to that of the first field period, television signals S4, S6, S8, ... corresponding to the even-numbered scanning lines are sequentially generated from the switch 47 and television signals S5, S7, S9, ... corresponding to the odd-numbered scananing lines are sequentially generated from the switch 57.

During the third field period, as described above, one set of switches 40 to 42 and the other set of switches 50 to 52 are connected oppositely to what is shown in Figure 8. Further, it will be clear from Figure 4B that the upper and lower relationship between the composed patterns of the signals of the odd-numbered blocks is exchanged during the first and third field periods.

For this reason, during the third field period, television signals S3 of the first block is employed as a reference signal.

At the time point when television signal S3 reaches the input terminal IN, television signal S1 of two fields before reaches the junction P5, whereas television signal S1+S2 of one line before reaches the junction P1. Moreover, at the time point when television signal S4 of one field before reaches the junction P3, television signals S6 and S4+S5 of two fields before respectively reach the junction P6 and the output side of the 1H delay line 37. Then, due to an operation similar to that of the first field period, television signals S1, S3, S5, ... corresponding to the odd-numbered scanning lines are sequentially supplied from the switch 47, while television signals S2, S4, S6, ... corresponding to the even-numbered scanning lines are sequentially supplied from the switch 57.

During the fourth field period, one set of switches 40 to 42 are connected in the illustrated states similarly to the first field period, whereas the other set of switches 50 to 52 are connected in the states opposite to the states shown in Figure 8 similarly to the third field period. Also, as earlier noted, the relationship between the odd-numbered block and the even-numbered block is exchanged in the odd field period and the even field period.

For this reason, during the fourth field period, television signal S6 of the second block is made a reference signal.

At the time point when television signal S6 reaches the input terminal IN, television signal S4 of two fields before reaches the junction P5, and television signal S4+S5 of one line before reaches the junction P1. At the time point when television signal S9 of one field before reaches the junction P2, television signals S8+S9 and S7 of two fields before respectively reach the junction P6 and the output side of the 1H delay line 37. Then, due to an operation similar to that of the first field period, television signals S4, S6, S8, ... corresponding to the even-numbered scanning lines are sequentially derived from the switch 47, and television signals S5, S7, S9, ... corresponding to the odd-numbered scanning lines are derived sequentially from the switch 57.

After the fifth field period, the block scanning television signal is converted to the sequential scanning television signal at every four fields.

The states of the switches 40 and 50 are shown in Table 2.

## Table 2

| Field | State of switch 40 | State of switch 50 |
|---|---|---|
| 1 | Engages contact 40a | Engages contact 50a |
| 2 | Engages contact 40a | Engages contact 50b |
| 3 | Engages contact 40b | Engages contact 50b |
| 4 | Engages contact 40b | Engages contact 50a |

As will be clear from Figure 4B, the block scanning television signal is transmitted in the odd field period during the odd-numbered scanning line period, whereas it is transmitted in the even field period during the even-numbered scanning line period. Accordingly, during the first to fourth field periods, the signal supplied from the switch 47 is an interlaced-scanning signal SIS corresponding to the transmission scanning line period, whereas the signal supplied from the switch 57 is an interpolated signal SIP which does not correspond to the transmission scanning line period.

With this embodiment, since the signal processing is carried out as described above, the original picture information composed and transmitted by the block scanning can be correctly separated and then reproduced, so that the picture quality of the reproduced picture can be prevented from being deteriorated.

While the respective television signals are separated from the signals composed into two groups of television signals such as television signal S1 and television signal S1 + S2 as described above, it is possible to separate the respective television signals by using the television signals composed into one group as television signal S1 + S2 + S3.

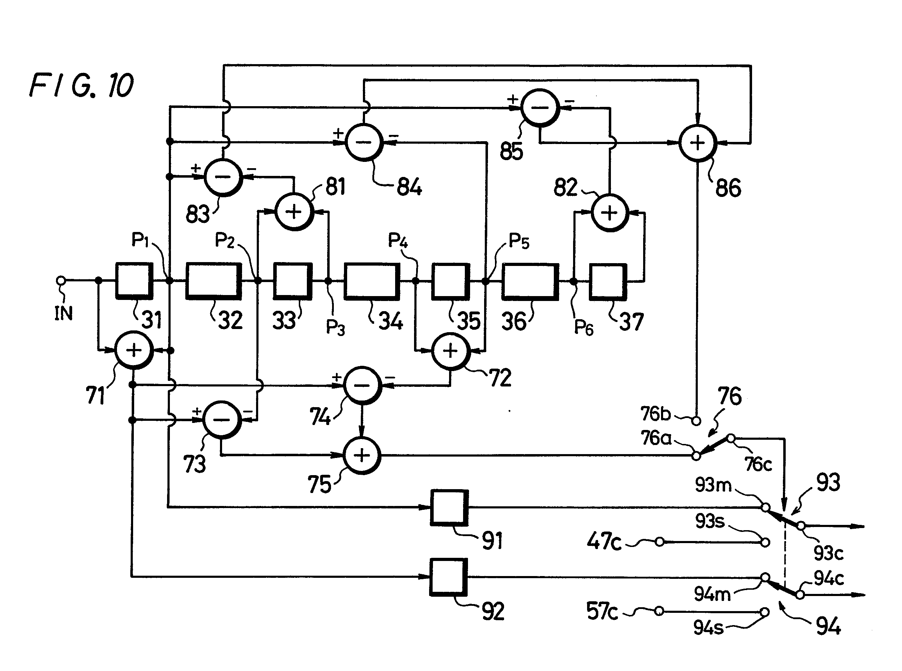

The detection of a moving picture using this embodiment will now be described with reference to Figure 10 which illustrates a circuit arrangement of the moving picture detecting circuit used in the embodiment. In Figure 10, like parts corresponding to those of Figure 8 have the same references.

Referring to Figure 10, the inputs and outputs of the 1H delay lines 31 and 35 are respectively supplied to adders 71 and 72. The output from the adder 71 is supplied commonly to subtractors 73 and 74. The output at the junction P2 is supplied to the subtractor 73, while the output from the adder 72 is supplied to the subtractor 74. The outputs from both the subtractors 73 and 74 are supplied to an adder 75, and the output from the adder 75 is supplied to a first fixed contact 76a of a switch 76.

The inputs and outputs of the 1H delay lines 33 and 37 are respectively supplied to adders 81 and 82. The output at the junction P1 is supplied commonly to subtractors 83, 84 and 85, the outputs from the adders 81 and 82 are respectively supplied to the subtractors 83 and 85, and the output at the junction P3 is supplied to the adder 81. The outputs from the subtractors 83 to 85 are supplied to an adder 86, whereas the output from the adder 86 is supplied to a second fixed contact 76b of the switch 76.

The output at the junction P1 and the output derived from the adder 71 are respectively supplied through delay circuits 91 and 92 used for phase adjustment to moving picture side fixed contacts 93m and 94m of switches 93 and 94. Still picture side fixed contacts 93s and 94s of the switches 93 and 94 are respectively connected to the movable contacts 47c and 57c of the step-switches 47 and 57 of Figure 8. Respective movable contacts 93c and 94c of the switches 93 and 94 are switched in ganged relation to each other under control of the output developed at a movable contact 76c of the switch 76.

The operation of the circuit shown in Figure 10 will now be described.

At the time point when the first transmission signal S1 of the first field exists at the junction P1, the succeeding transmission signal S2 + S3 exists at the input terminal IN. At the same time, the first and second transmission signals S1 + S2 and S3 of two fields before exist respectively at the junctions P4 and P5 and the first transmission signal S1 + S2 + S3 of one field before exists at the junction P2.

Accordingly, the outputs from both the adders 71 and 72 become S1 + S2 + S3, so that the subtractor 73 generates a field difference output, and the subtractor 74 generates a frame difference output. The field difference output and the frame difference output are added by the adder 75. As a result, when the output from the adder 75 is "1" (high level), a picture is judged as a moving picture (live picture), while when it is "0" (low level), the picture is judged as a still picture.

At the time point when the third transmission signal S4 + S5 + S6 of the first field period exists at the junction P1, the second and third transmission signals S4 + S5 and S6 of one field before exist respectively at the junctions P2 and P3 and a third transmission signal S4 + S5 + S6 of two fields before exists at the junction P5.

9

At the same time, second and third transmission signals S4 and S5+S6 of three fields before exist at the junction P6 and the output side of the 1H delay line 37, respectively.

Accordingly, the outputs from both the adders 81 and 82 become S4+S5+S6 with the result that the subtractor 83 generates the field difference output, and the subtractor 84 generates the frame difference output. Moreover, the subtractor 85 generates a three-field difference output. This field difference output and the frame difference output are added by the adder 86. Thus, when the output from the adder 86 is "1", a picture is judged as a moving picture, while when it is "0", the picture is judged as a still picture.

A moving picture is detected by the adders and subtractors 81 to 86 when three signals to be transmitted as one block during one horizontal scanning period, in other words, a signal $Si+Sj+Sk$ corresponding to the (3N)th scanning line of the interlaced scanning exists at the junction P1. For this reason, the switch 76 is connected oppositely by that shown in Figure 10 at the (3N)th scanning line and is connected as in the figure at the (3N+1)th and the (3N+2)th scanning lines.

In the case of a moving picture, the switches 93 and 94 are respectively connected as shown in Figure 10, and a signal corresponding to the immediately preceding scanning line is interpolated by the adder 71 and the interpolated signal is supplied through the switch 94.

With this embodiment, as described above, the field difference output can be obtained by using the signal of one block and the moving picture can be detected accurately.

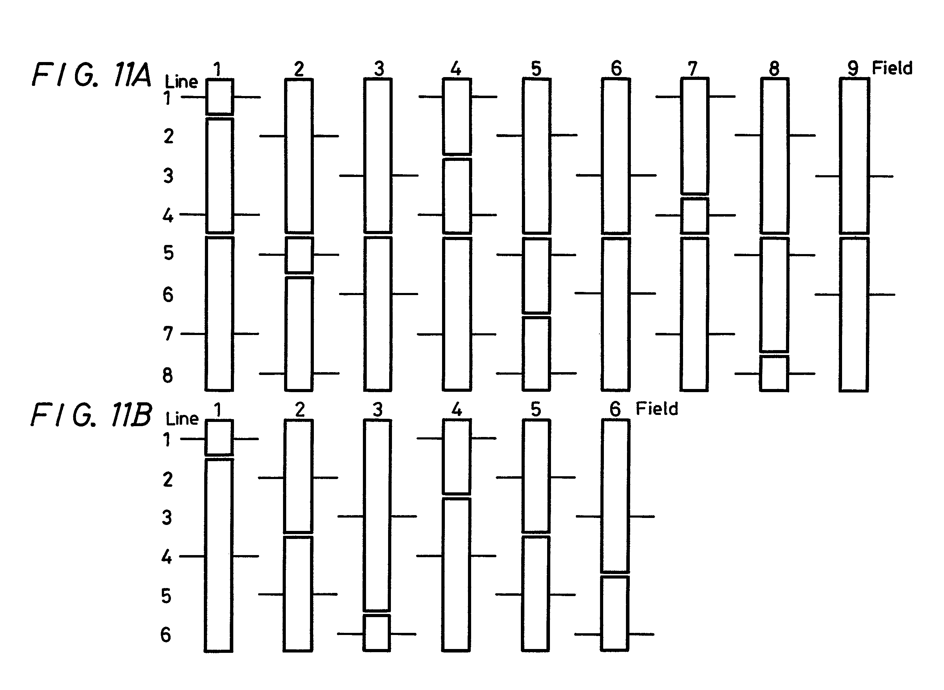

While the television signals corresponding to three scanning lines of the sequential double-scanning system are formed into one block and the pattern of the composing is repeated cyclically at every four field periods, as shown in Figure 11A, television signals corresponding to four scanning lines may be formed into one block and the pattern of the dividing or composing may be repeated cyclically at every nine field periods. Alternatively, as shown in Figure 11B, television signals corresponding to six scanning lines may be formed into one block and the pattern of the composing may be repeated cyclically at every six field periods. The block scannings shown in Figure 11 all corresponding to the 3:1 interlaced scanning system, and the transmission band width thereof can be compressed to 1/3.

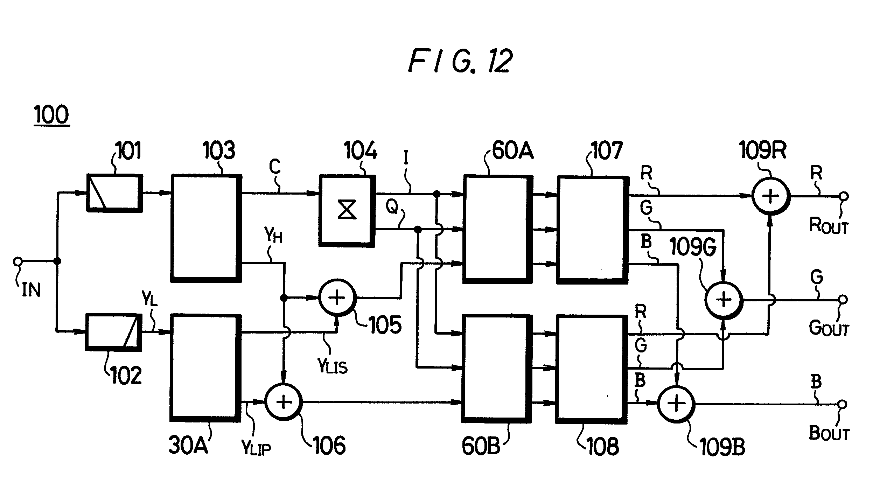

While the scanning conversion by the television signal transmitting system is carried out over the whole transmission band at both the transmitting side and the receiving side as described above; as shown in Figure 12, the block scanning/sequential scanning conversion may be carried out only for a luminnce signal Y of low frequency at the receiving side. Thus, the vertical resolution of the luminance signal Y of low frequency can be improved and an edge of the picture, which is long in the lateral direction can be reproduced with sharpness, so a significant effect is achieved for a viewer.

The arrangement of another embodiment of the present invention shown in Figure 12 will now be described.

Referring to Figure 12, there is shown a television receiver 100 for an embodiment of the present invention. A block scanning type luminance signal Y and a carrier chrominance signal C generated from the NTSC encoder 2 (Figure 5) are both supplied through an input terminal IN to a high-pass filter 101 and a low-pass filter 102 of the television receiver 100, in which they are separated into a carrier chrominance signal C and a high frequency luminance signal YH in a frequency band ranging from 2.1 to 4.2 MHz, and a low frequency luminance signal YL in a frequency band lower than 2.1 MHz.

The carrier chrominance signal C separated by a Y/C separator circuit 103 is supplied through a phase adjusting circuit (not shown) to a colour demodulator 104. The high frequency luminance signal YH from the Y/C separator circuit 103 is commonly supplied through a phase adjusting circuit (not shown) to adders 105 and 106.

A scan converter circuit 30A is arranged in such a manner that from the scan converter circuit 30 shown in Figure 8 the time-base converter circuit 60 is separated. In the scan converter circuit 30A, the block scanning type luminance signal YL in the low frequency band is converter into an interlaced scanning type luminance signal YLIS in the low frequency band and an interpolation luminance signal YLIP in the low frequency band. The luminance signal YLIS in the low frequency band is added to the luminance signal YH of the high frequency band by the adder 105, and then fed to a first double-scanning converter circuit 60A, whereas the interpolation luminance signal YLIP in the low frequency band is added to the luminance signal YH in the high frequency band by the adder 106, and is then fed to a second double-scanning converter circuit 60B. Colour signals I and Q from the colour demodulator circuit 104 are commonly supplied to both the double-scanning converter circuits 60A and 60B.

In the double-scanning converting circuits 60A and 60B, the respective signals of the high frequency luminance signal YH and the colour signals I and Q are interpolated by the signals corresponding to the immediately-preceding scanning lines within the respective fields.

The outputs from both the first and second double-scanning converter circuits 60a and 60B are respectively converted into three primary colour signals R, G and B by matrix circuits 107 and 108, and the signals of the same colour from the matrix circuits 107 and 108 are respectively added by adders 109R, 109G and 109B and then fed to output terminals ROUT, GOUT and BOUT, respectively.

As described above, since the television signals corresponding to a plurality of successive scanning lines in the vertical direction are formed into a single or a plurality of blocks and then transmitted alternately at every field while the compatibility with the existing standing televisions ignal transmitting system is maintained, the field difference output can be obtained only by the television signals of one block and the moving picture can be detected accurately. Thus, the block scanning can be properly converted into the sequential double-scanning without deteriorating the picture quality, and the vertical resolution of the reproduced picture can be improved.

A further embodiment of the present invention will now be described.

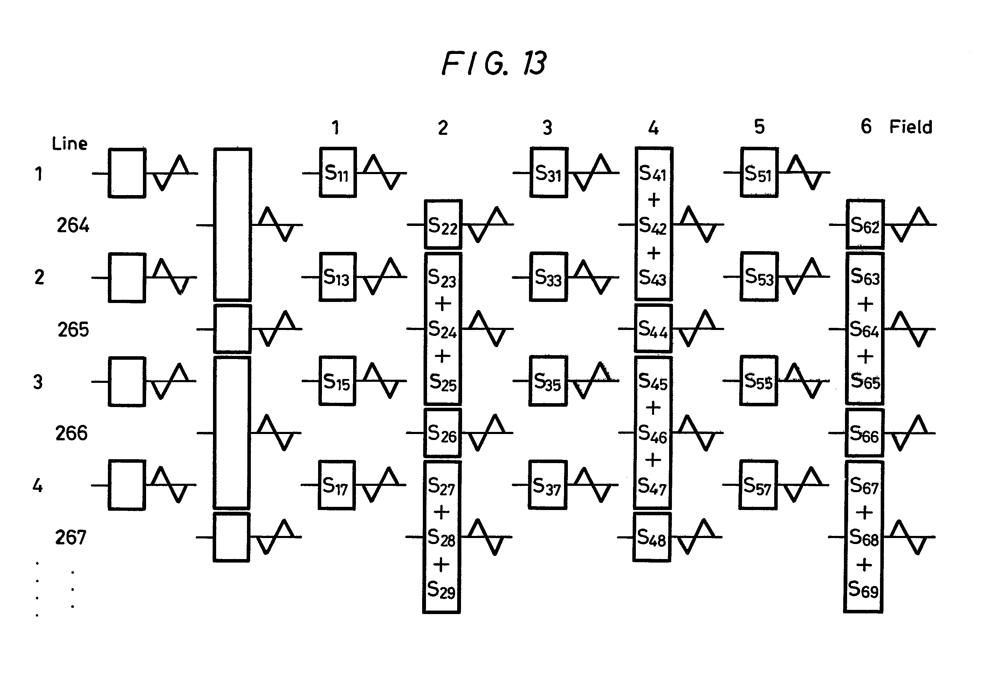

In this embodiment, the overall arrangement is the same as that already described in relation to Figure 5. Turning back to Figure 5, the sequential-scanning type television camera 1 produces television signals corresponding to 525 scanning lines at every 1/60 second as shown in Figure 4A. The output from the camera 1 is supplied to the scan converter circuit 10 located at the transmitting side, in which it is converted to a television signal of block scanning type corresponding to the interlaced scanning so as to become compatible with the existing television signal transmitting system as shown in Figure 13. Although this scanning conversion will be described more fully later, as illustrated in Figure 13, only the television signals of the odd-numbered scanning lines are transmitted at the timings of the odd-numbered scanning lines of the sequential double-scanning during the odd field period, while during the even field period, the television signals are transmitted at the timings of the even-numbered scanning lines of the sequential double-scanning. However, during the second field period, television signals S22, S26, ... of only the even-numbered scanning lines and one block of television signal S23, S24, S25; another one block of television signal S27, S28, S29, ... corresponding to a plurality of scanning lines continuous in the vertical direction and across the even-numbered scanning lines are alternately transmitted at the timings of even-numbered scanning lines.

During the fourth field, one block of television signal S41, S42, S43; another block of television signal S45, S46, S47, and television signals S44 and S48, each corresponding to only a single scanning line ... are alternately transmitted with phases opposite to those of the second field period at the timings of even-numbered scanning lines.

Moreover, the television signal of only the single scanning line in the second field period, for example, television signal S22 forms a signal block together with the television signals of upper and lower scanning lines of the immediately-preceding or immediately-succeeding odd field period, for example, television signals S11, S13 or S31, S33. In like manner, the television signal of only the single scanning line in the fourth field, for example, television signal S44 forms a signal block together with the television signals of the upper and lower scanning lines in the immediately-preceding or immediately-succeeding odd field period, for example, television signals S33, S35 or S53, S55.

The above pattern is repeated within each field and is also repeated cyclically at every four fields.

The phase of the colour sub-carrier signal is inverted at every scanning line in the same field and at every frame in the same scanning line by a frequency-interleaved operation similar to the existing television signal transmitting system.

Similar to the television signal transmitting system shown in Figure 5, the output from the scan converter circuit 10 is supplied to the NTSC encoder 2, in which it is converted to a television signal of the NTSC system. The NTSC television signal is then supplied through the broadcasting system 3 to the existing receiver RXN and the receiver RXE conforming to the present television transmitting system.

In the existing receiver RXN, three primary colour television signals decoded by the NTSC decoder 4 are supplied to the picture tube 5, whereby television signals corresponding to the interlaced scanning as shown in Figure 13 are reproduced on the picture screen thereof.

In the receiver RXE conforming to the present television signal transmitting system, three primary colour television signals are decoded by the NTSC decoder 6 and supplied to a scan converter circuit 30, which will be described in greater detail later, and thereby sequentially-scanned. Then, they are supplied to the double-scananing type picture tube 7, whereby a double-scanning sequential television signal shown in Figure 4A is displayed on the picture screen thereof.

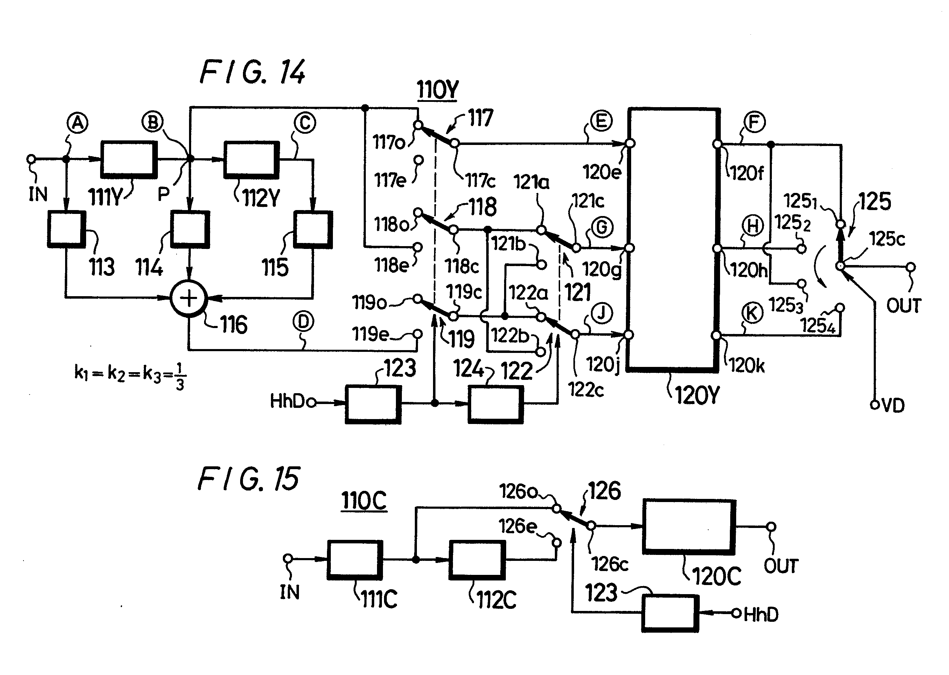

Conversion of the sequential-scanning to block scanning will now be described with reference to Figures 14 to 16.

Figure 14 illustrates an arrangement of a scan converter circuit 110Y used for sequential scanning/block scanning conversion of the luminance signal.

Referring to Figure 14, there are shown first and second delay lines 111Y and 112Y of which the delay times are selected to be one horizontal scanning period Hh (=H/2) of the double-scanning. Both the first and second delay lines 111Y and 112Y are connected to each other in series and then connected to the input terminal IN.

There are shown first, second and third attenuators 113, 114 and 115, the respective attenuation factors k1, k2 and k3 of which are selected such that the sum of k1, k2 and k3 is 1, for example, each of them is 1/3. The input to the first delay line 111Y and the input and output of the second delay line 112Y are respectively supplied through the first, second and third attenuators 113, 114 and 115 to an adder 116. The output from the first delay line 111Y is commonly supplied to one fixed contact 117o of a first change-over switch 117 and to a second fixed contact 118e of a second change-over switch 118. the output from the adder 116 is supplied to a second fixed contact 119e of a third change-over switch 119. A time-base expander circuit 120Y receives at its input terminal 120e the output at a movable contact 117c of the first change-over switch 117. A movable contact 118c of the second change-over switch 118 commonly connected to a first fixed contact 121a of a fourth change-over switch 121 and a second fixed contact 122b of a fifth change-over switch 122. Whereas, a movable contact 119c of the third change-over switch 119 is commonly connected to a second fixed contact 121b of the fourth change-over switch 121 and a first fixed contact 122a of the fifth change-over switch 122. The outputs at the movable contacts 121c and 122c of the fourth and fifth change-over switches 121 and 122 are respectively supplied to input terminals 120g and 120j of the time-base expander circuit 120Y.

A double-scanning horizontal drive pulse HhD is supplied to a first flip-flop circuit 123, and under the control of the output from the first flip-flop circuit 123, the respective movable contacts 117c to 119c of the first to third change-over switches 117 to 119 are switched in ganged relation at every horizontal drive pulse HhD such that the movable contacts 117c and 119c respectively engage the first fixed contacts 117o to 119o of the first to third change-over switches 117 to 119 at the odd-numbered line of the double-scanning, while they respectively engage the second fixed contacts 117e to 119e thereof at the even-numbered line of the double-scanning. The output from the first flip-flop circuit 123 is supplied to a second flip-flop circuit 124. Under the control of the output from the second flip-flop circuit 124, the fourth and fifth change-over switches 121 and 122 are switched in ganged relation such that their movable contacts 121c and 122c respectively engage their first fixed contacts 121a and 122a at the first and second lines of the double-scanning while they respectively engage their second fixed contacts 121b and 122b at the third and fourth lines of the double-scanning at every two horizontal drive pulses HhD.

The states of the switches 117 and 121 are shown in Table 3.

<u>Table 3</u>

| Double-scanning line | State of switch 117 | State of switch 121 |
| --- | --- | --- |
| 1 | Engages contact 117o | Engages contact 121a |
| 2 | Engages contact 117e | Engages contact 121a |
| 3 | Engages contact 117o | Engages contact 121b |
| 4 | Engages contact 117e | Engages contact 121b |

Turning back to Figure 14, the output developed at an output terminal 120f of the time-base expander circuit 120Y is supplied to first and third fixed contacts $125_1$ and $125_3$ of a step-switch 125. At the same time, the outputs developed at output terminals 120h and 120k of the time-base expander circuit 120Y are respectively supplied to second and fourth fixed contacts $125_2$ and $125_4$ of the step-switch 125, whereas the output at a movable contact 125c of the step-switch 125 is supplied to an output terminal OUT.

Under the control of the vertical drive pulse VD, the movable contact 125c of the step-switch 125 engages the first fixed contact $125_1$ during the first field period and engages in turn the second to fourth fixed contacts $125_2$ to $125_4$ during the second to fourth field periods.

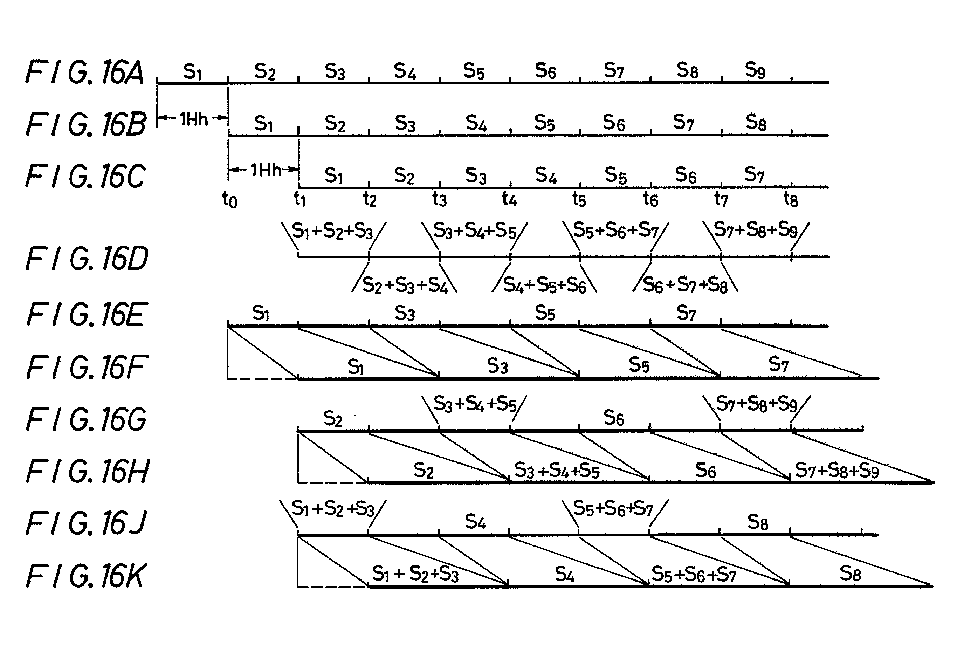

Figure 15 illustrates a circuit arrangement of a scan converter circuit 110C used for the sequential scanning/block scanning of the colour signal.

Referring to Figure 15, there are provided first and second 1Hh delay lines 111C and 112C which are connected in series to an input terminal IN. The input and the output of the second delay line 112C are supplied to first and second fixed contacts 126o and 126e of a change-over switch 126. The output at a movable contact 126c of the change-over switch 126 is supplied to a time-base expander circuit 120C, and the output from the time-base expander circuit 120C is supplied to an output terminal OUT.

A double-scanning horizontal drive pulse HhD is supplied to the flip-flop circuit 123. Under the control of the output from the first flip-flop circuit 123, the movable contact 126c of the switch 126 engages the first fixed contact 126o at the odd-numbered line of the double-scanning while it engages the second fixed contact 126e at the even-numbered line of the double-scanning.

Two of the above scan converter circuits 110C are used for a pair of colour signals, for example, colour signals I and Q.

The operation of the scan converter circuit 110Y shown in Figure 14 will be described next.

During the first field period, television signals $\underline{A}$, $\underline{B}$ and $\underline{C}$ at the input side of the first delay line 11Y, the junction P between the first and second delay lines $11\overline{1}Y$ and $\overline{1}12Y$ and the output side of the second delay line 112Y are each arranged to have a time difference of one horizontal scanning period 1Hh of the doubled-scanning as shown in Figures 16A, 16B and 16C.

In the scan converter circuit 110Y of Figure 14, the attenuation factors k1, k2 and k3 of the first, second and third attenuators 113, 114 and 115 are all 1/3, so that, as shown in Figure 16D, an output $\underline{D}$ from the adder 116 becomes equal to the sum $\underline{A} + \underline{B} + \underline{C}$ of television signals $\underline{A}$, $\underline{B}$ and $\underline{C}$ developed at the input side of the first

**0 256 860**

delay line 111Y, the junction P and the output side of the second delay line 112Y. In this case, the attenuation factors of 1/3 of the first to third attenuators 113 to 115 are omitted for simplicity.

Considering the respective first, third, fifth ... horizontal scanning periods starting from time points t0, t2, t4, ... of the television signal B at thejunction P which becomes a reference point, as shown in Figure 16B, there exist television signals S1, S3, S5, ... corresponding to the respective odd-numbered scanning lines of the respective fields of the double-scanning. As shown in Figure 16B, television signals S2, S4, ... corresponding to the respective even-numbered scanning lines exist during the horizontal scanning periods starting at time points t1, t3, ... of the television signal B. Further, as shown in Figure 16D, during the respective horizontal scanning periods which begin at time points t1, t3, ... of the signal D there exist block signals S1 + S2 + S3; S3 + S4 + S5; ... of the sums of the television signals S2, S4, ... corresponding to the respective even-numbered scanning lines and television signals corresponding to the upper and lower odd-numbered scanning lines.

Accordingly, to the movable contact 117c of the first change-over switch 117 which is changed in position at every scanning line there are intermittently supplied television signals S1, S3, S5, ... corresponding to the odd-numbered scanning lines during the respective scanning periods which begin at time points t0, t12, t4, ... as shown in Figure 16E. The movable contact 118c of the second change-over switch 118 are supplied with the television signals S2, S4, ... corresponding to the respective even-numbered scanning lines during the respective horizontal scanning periods which begin at time points t1, t3, ... Moreover, the movable contact 119c of the third change-over switch 119 are supplied with the block signals S1 + S2 + S3; S3 + S4 + S5, ... corresponding to the respective even-numbered scanning lines during the respective horizontal scanning periods which begin at time points t1, t3, ...

The television signals, which are supplied to the respective movable contacts 118c and 119c of the switches 118 and 119, and the timings thereof are as described above. The fourth and fifth change-over switches 121 and 122 supplied with these television signals are switched at every two horizontal scanning lines of the double-scanning as mentioned before. Thus, from the fourth change-over switch 121 there are alternately supplied television signals S2, S6, ..., each of which corresponds to the single even-numbered scanning line and block signals S3 + S4 + S5; S7 + S8 + S9, ..., each of which corresponds to three scanning lines at every other one horizontal scanning period as shown in Figure 16G.

From the fifth change-over switch 122 there are alternately supplied block signals S1 + S2 + S3; S5 + S6 + S7, ..., each of which corresponds to three scanning lines and television signals S4, S8, ..., each of which corresponds to the single even-numbered scanning line at every other one horizontal scanning period as shown in figure 16J.

In the time-base expander circuit 120Y, as shown in Figures 16F, 16H and 16K, the television signals E, G and J supplied thereto are immediately written in a memory (not shown) and then read out therefrom at a reading time period twice as long as the writing time period, and thereby converted to an interlaced television signal continuous in time. The signals F, H and K are fed from its output terminals 120f, 120h and 120k to the step-switch 125.

During the first field period, the movable contact 125c of the step-switch 125 engages its first fixed contact 125₁ and is then moved by one step in the counter-clockwise direction at every vertical drive pulse VD.

Accordingly, during the first and third field periods, from the step-switch 125, there are supplied television signals S1, S3, S5, ... corresponding to the odd-numbered scanning lines of the double-scanning as shown in Figure 16F.

During the second field period, from the step-switch 125, there are alternately supplied the television signal S2, ... corresponding to the even-numbered scanning line of the double-scanning and the block signal S3 + S4 + S5; ... each of which corresponds to three scanning lines as shown in Figure 16H.

During the fourth field period, from the step-switch 125, there are alternately supplied the block signal S1 + S2 + S3; ... each of which corresponds to the three scanning lines of the double-scanning and the television signal S4, ... corresponding to the even-numbered scanning line as shown in Figure 16K.

In the scan converter circuit 110C shown in Figure 15, the switch 126 is changed in position at every scanning line of the double-scanning as described before, whereby the colour signal corresponding to the odd-numbered scanning line of the double-scanning is used as a colour signal corresponding to the even-numbered scanning line.

The colour signal thus converted is supplied to the time-base expander circuit 120C, in which the time-base thereof is expanded twice. Moreover, a pair of colour signals with time-bases expanded are converted into a carrier chrominance signal by means of a known circuit, and are superimposed upon the output from the scan converter circuit 110Y of Figure 14.

This scan conversion processing is repeated at every four fields, and the transmission signal of the block scanning type shown in Figure 13 is supplied through the output terminal OUT of the scan converter circuit 110Y to the broadcasting system 3 (Figure 5).

With the transmission signal of this embodiment, flicker occurring when the signal is reproduced by the television receiver of the existing system can be reduced.

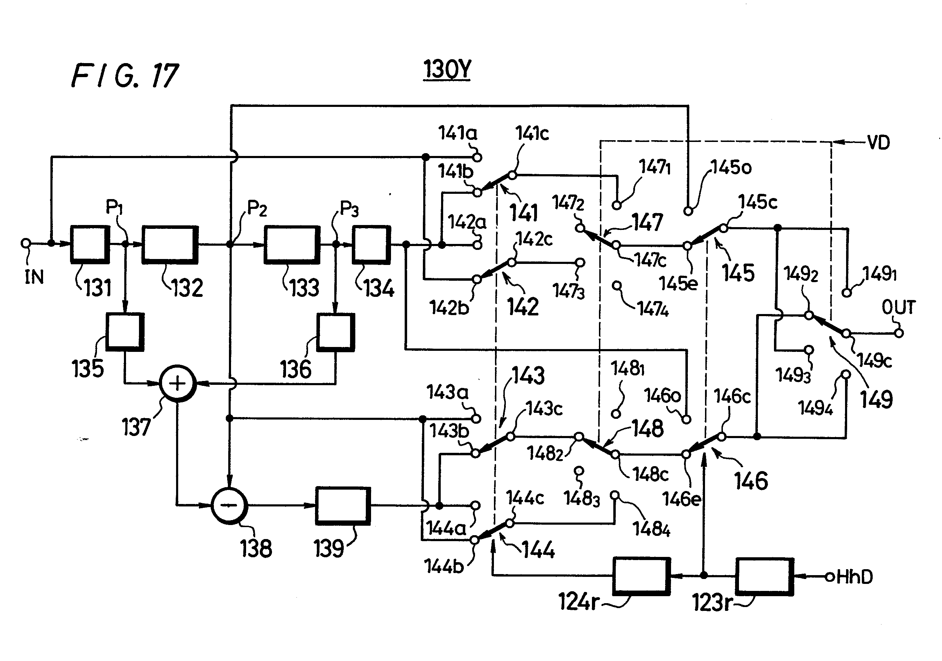

Conversion of the block scanning into sequential scanning will now be described with reference to Figure 17.

Figure 17 illustrates a circuit arrangement of a scan converter circuit 130Y used for such conversion.

Referring to Figure 17, there are provided H/2 delay lines 131 and 134 and 262H delay lines 132 and 133,

13

respectively. A block scanning television signal supplied to an input terminal IN is supplied to the delay line 131 of the first stage. The delay lines 131 and 134 are sequentially connected in series. A junction between the delay lines 131 and 132 is P1, and respective junctions between adjacent ones of the delay lines 132 to 134 are respectively P2 and P3 in turn. The outputs at the first and third junctions P1 and P3 are supplied respectively through first and second attenuators 135 and 136 to an adder 137, whereas the output at the second junction P2 is supplied to a subtractor 138. The output from the adder 137 is supplied to the subtractor 138, and the output from the subtractor 138 is supplied to an amplifier 139. Attenuation factors k1 and k3 of the first and second attenuators 135 and 136 are respectively, for example, 1/3 as those of the first and second attenuators 113 and 114 of Figure 14. An amplification factor 1/k2 of the amplifier 139 is selected to be, for example, 3.

First to fourth change-over switches 141, 142, 143 and 144 are controlled by an output from a flip-flop circuit 124r in such a manner that they are switched in ganged relation at every two double-scanning horizontal drive pulses HhD.

Fifth and sixth change-over switches 145 and 146 are controlled by an output from a flip-flop circuit 123r such that they are switched in ganged relation at every double-scanning horizontal drive pulse HhD.

The states of the switches 141 and 145 are shown in Table 4.

### Table 4

| Double-scanning line | State of switch 141 | State of switch 145 |
|---|---|---|
| 1 | Engages contact 141a | Engages contact 145o |
| 2 | Engages contact 141a | Engages contact 145e |
| 3 | Engages contact 141b | Engages contact 145o |
| 4 | Engages contact 141b | Engages contact 145e |

First, second and third step-switches 147, 148 and 149 are controlled by the vertical drive pulse VD in such a manner that their movable contacts 147c to 149c respectively engage their first fixed contacts $147_1$ to $149_1$ during the first field period, and seqentially engage their second, third and fourth fixed contacts $147_2$ to $149_2$, $147_3$ to $149_3$ and $147_4$ to $149_4$ incrementally during the second, third and fourth field periods.

A first fixed contact 141a of the first change-over switch 141, and a second fixed contact 142b of the second change-over switch 142 are connected together to an input terminal IN. The output from the H/2 delay line 134 is commonly supplied to a first fixed contact 142a of the switch 142, a second fixed contact 141b of the change-over switch 141 and a first fixed contact 146o of the sixth change-over switch 146.

A first fixed contact 143a of the third change-over switch 143, a second fixed contact 144b of the fourth change-over switch 144, and a first fixed contact 145o of the fifth change-over switch 145 are connected to the junction P2 between the delay lines 132 and 133. the output from the amplifier 139 is supplied commonly to a first fixed contact 144a of the switch 144 and a second fixed contact 143b of the switch 143.

Movable contacts 141c and 142c of the switches 141 and 142 respectively engage first and third fixed contacts $147_1$ and $147_3$ of the first step-switch 147.

Movable contacts 143c and 144c of the switches 143 and 144 engage second and fourth fixed contacts $148_2$ and $148_4$ of the second step-switch 148, respectively. As illustrated in Figure 17, second and fourth fixed contacts $147_2$ and $147_4$ of the first step-switch 147, and first and third fixed contacts $148_1$ and $148_3$ of the second step-switch 148 are disengaged.

Movable contacts 147c and 148c of both the step-switches 147 and 148 engage second fixed contacts 145e and 146e of the fifth and sixth change-over switches 145 and 146, respectively. A movable contact 145c of the switch 145 is commonly connected to first and third fixed contacts $149_1$ and $149_3$ of the third step-switch 149. Also, a movable contact 146c of the switch 146 commonly engages second and fourth fixed contacts $149_2$ and $149_4$ of the third step-switch 149, and a movable contact 149c of the third step-switch 149 is connected to an output terminal OUT.

With this embodiment, a colour signal component is eliminated from the transmission signal shown in Figure 13 by a colour signal eliminating circuit which will be described later. The luminance signal is converted in a double-scanning fashion and thereby reconverted into the state which it was in before being time-base-expanded, as shown in Figures 16E, 16G and 16J. The luminance signal of which the line frequency is doubled is supplied to the scan converter circuit 130Y of Figure 17.

The operation of the portion of the embodiment shown in Figure 17 can be summarized as follows.

In the case of the odd field, the input signal is used as it is as the signal corresponding to the odd-numbered scanning line of the double-scanning. As the signal corresponding to the even-numbered scanning line, a signal corresponding to the single even-numbered scanning line is interpolated from the preceding or succeeding odd field.

In the case of the even field period, a signal corresponding to the odd-numbered scanning line is interpolated from the preceding odd field period as the signal corresponding to the odd-numbered scanning line of the double-scanning. The input signal is directly used as the signal corresponding to the single even-numbered scanning line. Moreover, for the block signals corresponding to the even-numbered scanning lines, a signal corresponding only to the even-numbered scanning line is separated by using the signal of the lower odd-numbered scanning line of the preceding field, and the signal of the upper odd-numbered scanning line of the succeeding field.

In the case of a still picture, since the television signals corresponding to the same scanning lines of each field period become equal, the above mentioned signal processing can be carried out.

The operation of the scan converter circuit 130Y of Figure 17 will now be described in detail with reference to Figure 13.

In the following description, the junction P2 between both the 262H delay lines 132 and 133 is taken as a reference point, and the respective television signals have number suffixes indicating the fields and the scanning line of the double-scanning for simplicity.

During the odd field period, for example, the third field period, television signals S31, S33, S35, ... corresponding to the odd-numbered scanning lines sequentially reaching the junction P2, are supplied through the first fixed contact 145o and the movable contact 145c of the fifth change-over switch 145 and the third fixed contact $149_3$ and the movable contact 149c of the third step-switch 149 to the output terminal OUT.

During the second horizontal scanning period of the third field, television signal S22 of the preceding field and on the same scanning line reaches the output side of the delay line 134. The television signal S22 is supplied through the first fixed contact 142a and the movable contact 142c of the second change-over switch 142 to the third fixed contact $147_3$ of the first step-switch 147. During the fourth horizontal scanning period of the third field, television signal S44 corresponding to the succeeding field and on the same scanning line reaches the input side of the delay line 131. Television signal S44 is supplied through the second fixed contact 142b and the movable contact 142c of the second change-over switch 142 to the third fixed contact $147_3$ of the first step-switch 147, similarly.

Television signals S22 and S44 are both supplied to the output terminal OUT via the movable contact 147c of the step-switch 147, the second fixed contact 145e and the movable contact 145c of the change-over switch 145, and the fixed contact $149_3$ and the movable contact 149c of the third step-switch 149.

During the fifth field period, television signals S51, S53, S55, ... at the junction P2 are supplied through the first fixed contact 145o and the movable contact 145c of the fifth change-over switch 145, and the first fixed contact $149_1$ and the movable contact 149c of the third step-switch 149 to the output terminal OUT.

During the second and fourth horizontal scanning periods of the fifth field, television signal S62 at the input side of the delay line 131 and television signal S44 developed at the output side of the delay line 134 are supplied through the first and second fixed contacts 141a and 141b of the first change-over switch 141 to the movable contact 141c thereof. Then, television signals S62 and S44 are supplied through the first fixed contact $147_1$ and the movable contact 147c of the step-switch 147, the second fixed contact 145e and the movable contact 145c of th change-over switch 145, and the first fixed contact $149_1$ and the movable contact 149c of the step-switch 149 to the output terminal OUT.

Signal processing exactly the same as that of the fifth field period is carried out during the first field period.

During the first and third horizontal scanning periods of the even fields, for example, the second field, no television signal reaches the junction P2, and television signals S11 and S13 corresponding to the preceding field and on the same scanning line reach the output side of the delay line 134. Television signals S11 and S13 are supplied through the first fixed contact 146o and the movable contact 146c of the sixth change-over switch 146, and the second fixed contact $149_2$ and the movable contact 149c of the third step-switch 149 to the output terminal OUT.

During the second horizontal scanning period of the second field, television signal S22 reaches the junction P2. Television signal S22 is supplied to the output terminal OUT via the first fixed contact 143a and the movable contact 143c of the third change-over switch 143, the second fixed contact $148_2$ and the movable contact 148c of the second step-switch 148, the second fixed contact 146e and the movable contact 146c of the change-over switch 146, and the second fixed contact $149_2$ and the movable contact 149c of the step-switch 149.

During the fourth horizontal scanning period of the second field, a block signal S23+S24+S25 at the junction P2 is supplied to the subtractor 138. At the same time, television signal S33 of the succeeding field and developed at the junction P1 and a signal S15 of the preceding field developed at the junction P3 are respectively supplied to the first and second attenuators 135 and 136, in which they are adjusted in level and then fed to the adder 137.

In this embodiment, the subtractor 138 carries out the calculation expressed by the following equation (1) thereby to separate a desired television signal S24:

$$\frac{S23+S24+S25}{3} \quad - \quad \frac{S33+S15}{3} \quad = \quad \frac{S24}{3} \qquad \ldots(1)$$

because S23=S33, and S25=S15 (still picture).

The separated television signal S24 is supplied to the amplifier 139, in which it is adjusted to a predetermined level and then fed through the second fixed contact 143b of the change-over switch 143 to the movable contact 143c thereof. Thus, television signal S24 is supplied to the output terminal OUT the same way as television signal S22.

During the first and third horizontal scanning periods of the fourth field, television signals S31 and S33 at the output side of the delay line 134 are supplied through the switch 146, the fourth fixed contact 149₄ and the movable contact 149c of the step-switch 149 to the output terminal OUT in a substantially similar manner to that of television signals S11 and S13 of the second field period.

During the fourth horizontal scanning period of the fourth field, television signal S44 at the junction P2 is supplied to the output terminal OUT via the second fixed contact 144b and the movable contact 144c of the fourth change-over switch 144, the fourth fixed contact 148₄ and the movable contact 148c of the second step-switch 148, the second fixed contact 146e and the movable contact 146c of the change-over switch 146, and the fourth fixed contact 149₄ and the movable contact 149c of the step-switch 149.

During the second horizontal scanning period of the fourth field, the block signal S41+S42+S43 at the junction P2 is similarly processed by using television signal S51 of the succeeding field developed at the junction P1 and television signal S33 of the preceding field at the junction P2 thereby to separate a desired television signal S42 from the block signal S41+S42+S43. The separated television signal S42 is adjusted in level and then fed through the first fixed contact 144a of the change-over switch 144 to the movable contact 144c thereof. Thereafter, television signal S42 is supplied to the output terminal OUT in the same way as that of television signal S44.

Similar signal processing is carried out in each field, and after the sixth field, the block scanning television signal is converted into the sequential scanning television signal at every four fields.

With this embodiment, by the signal processing described, the original picture information composed by the block scanning and transmitted can be correctly separated and reproduced. In this case, the picture quality of the reproduced picture can be prevented from being deteriorated.

In this embodiment, the colour signal component is eliminated from the transmission signal shown in Figure 13 and the moving picture can be detected by the luminance signal component only.

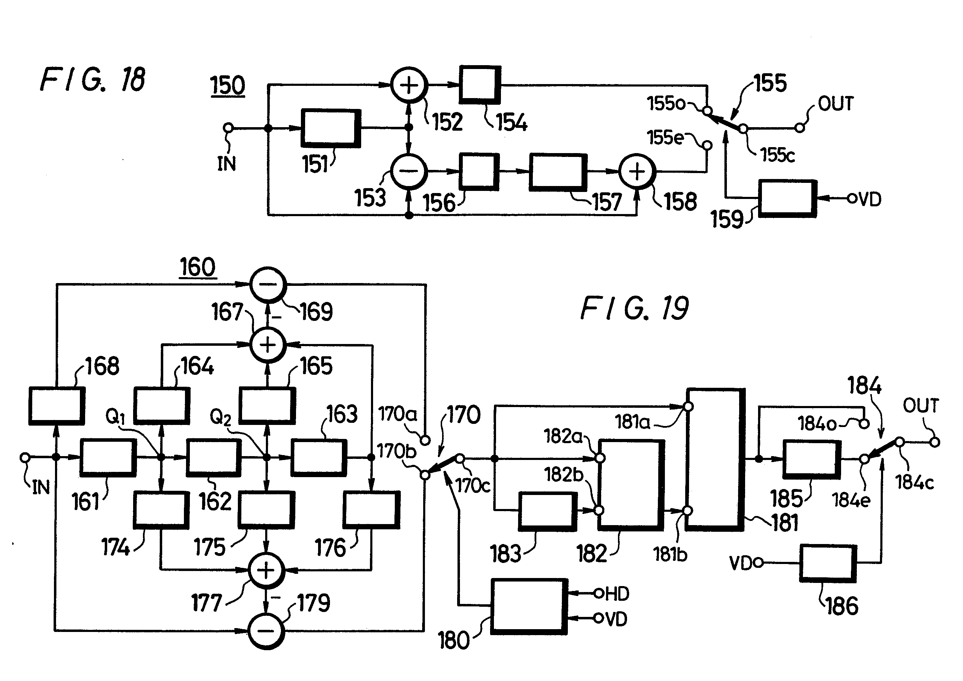

A colour signal eliminating circuit 150 used in this embodiment will now be described with reference to Figure 18.

Referring to Figure 18, in the colour signal eliminating circuit 150, a composite video signal supplied to an input terminal IN is supplied commonly to a frame delay line 151, a first adder 152 and a subtractor 153. The output from the frame delay line 151 is supplied to the first adder 152 and the subtractor 153. The output from the first adder 152 is supplied through a first attenuator 154 to a first fixed contact 155o of a change-over switch 155. The output from the subtractor 153 is supplied through a second attenuator 156 and a 263H delay line 157 to a second adder 158. The attenuation factors of the first and second attenuators 154 and 156 are both 1/2. The second adder 158 is supplied with the input video signal from the input terminal IN and the output from the second adder 158 is supplied to a second fixed contact 155e of the change-over switch 155. The output at a movable contact 155c of the change-over switch 155 is supplied to an output terminal OUT. A vertical drive pulse VD is supplied to a flip-flop circuit 159, and under the control of the output from this flip-flop circuit 159, the movable contact 155c of the change-over switch 155 engages the first fixed contact 155o during the odd field period and engages the second fixed contact 155e during the even field period.

The operation of the colour signal eliminating circuit 150 will now be described with reference to Figure 13.

In the odd field periods, television signals S31, S33, ... corresponding to the respective scanning lines of, for example, the third field are added to television signals S11, S13, ... of two vertical periods before, for example, television signals S11, S13, ... of the first field by the first adder 152, and the colour signal components of opposite phases shown in Figure 13 cancel each other, leaving only the luminance signal component.

In the case of even fields, with respect to the block signal S41+S42+S43 of the (246)th scanning line of, for example, the fourth field, a difference component S11-S31 of a television signal of 263H periods before, that is, television signal S31 of the third field and the first line, and a television signal of two vertical periods before, that is, television signal S11 of the first field and the first line is calculated by the subtractor 153. In other words, he colour signal component of negative phase is calculated. Then, in the second adder 158, the calculated colour signal component of the negative phase and the colour signal component of positive phase of the block signal S41+S42+S43 cancel each other, leaving only the luminance signal component.

In like manner, with respect to television signal S44 of the (265)th line in the fourth field period, a difference component S13 S33 of the television signal 263H periods before, that is, television signal S33 of the second line in the third field and a television signal of two vertical periods before, that is, television signal S13 of the second line in the first field, in other words, the colour signal component of positive phase is calculated by the subtractor 153. Then, this colour signal component of positive phase and the colour signal component of negative phase of television signal S44 cancel each other out by the second adder 158, leaving only the luminance signal component.

The above-mentioned operations are alternately repeated at every scanning line in the same field period. Moreover, the phase of the colour signal component is inverted at every frame and a similar operation is repeated.

Moving picture detection in this embodiment will now be described with reference to Figures 19 to 22.

Figure 19 shows a moving picture detecting circuit 160 comprising a 262H delay line 161, a 1H delay line 162 and a 262H delay line 163 connected in series to an input terminal IN. Respective outputs at a junction Q1 between the delay lines 161 and 162, and at a junction Q2 between the delay lines 162 and 163 are respectively supplied through inversion attenuators 164 and 165 to an adder 167, while the output from the delay line 163 is supplied directly to the adder 167. The input to the delay line 161 is supplied through an attenuator 168 to a subtractor 169, and the output from the subtractor 169 is supplied to a first fixed contact 170a of a change-over switch 170.

The outputs developed at the junctions Q1 and Q2 and the output from the delay line 163 are supplied respectively through attenuators 174, 175 and 176 to an adder 177. The input to the delay line 161 is supplied directly to a subtractor 179 which also receives the output from the adder 177. Then, the output from the subtractor 179 is supplied to a second fixed contact 170b of the change-over switch 170.

A horizontal drive pulse HD and a vertical drive pulse VD are supplied to a control circuit 180. Under the control of the output from the control circuit 180, the movable contact 170c of the change-over switch 170 engages the first fixed contact 170a for the odd-numbered scanning line of the second field, and the even-numbered scanning line of the fourth field, while it engages the second fixed contact 170b for the even-numbered scanning line of the second field and the odd-numbered scanning line of the fourth field.

In this embodiment, the attenuator factors of the attenuators 164, 165, 168, 174, 175 and 176 are all 1/3.

There are further provided a double-scanning processor circuit 181 and a maximum value selector circuit 182. The output from the change-over switch 170 is commonly supplied to first input terminals 181a and 182a of the double-scanning processor circuit 181 and the maximum value selector circuit 182, and is also supplied through a 1H delay line 183 to a second input terminal 182b of the maximum value selector circuit 182. The output from the maximum value selector circuit 182 is supplied to a second input terminal 181b of the double-scanning processor circuit 181. The output from the double-scanning processor circuit 181 is supplied to a first fixed contact 184o of a change-over switch 184, and is also supplied through a 1V delay line 185 to a second fixed contact 184e of the change-over switch 184. The output at a movable contact 184c of the change-over switch 184 is supplied to an output terminal OUT.

The vertical drive pulse VD is supplied to a flip-flop circuit 186, and under the control of the output from the flip-flop circuit 186, the movable contact 184c of the change-over switch 184 engages the first fixed contact 184o during the odd field period, and engages the second fixed contact 184e during the even field period.

The operation of the moving picture detecting circuit 160 of Figure 19 can be summarized as follows.

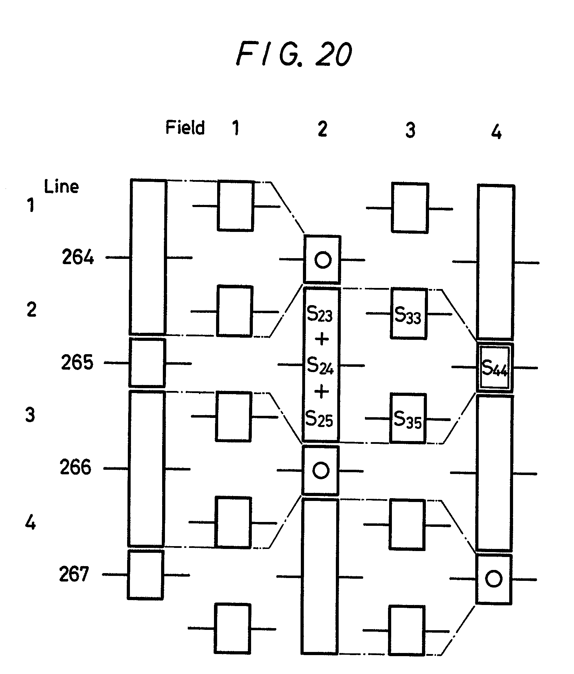

In the case of the television signal corresponding to the single line of the double-scanning during the even field periods, the difference between this television signal and the television signals on the upper and lower scanning lines on the preceding field, and also the difference between the above television signal and the block signal of the same scanning line in the further-preceding field are detected as shown in Figure 20, which is a conceptual diagram.

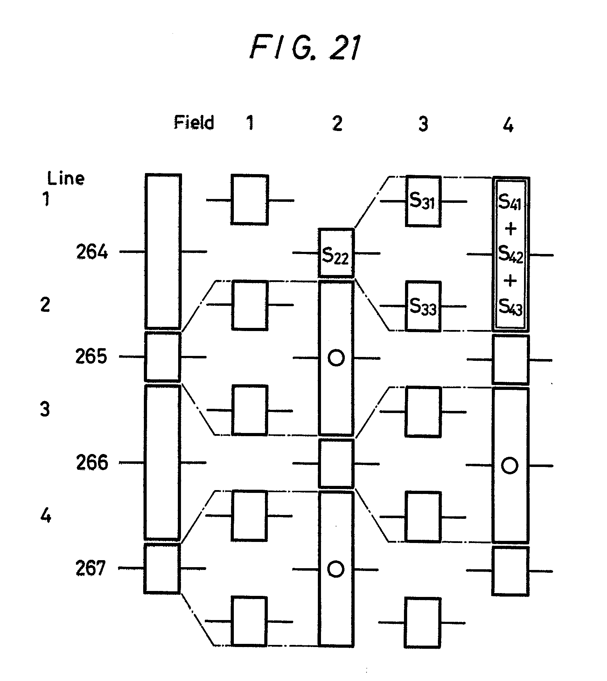

In the case of the block signal of the even field periods, the difference between the block signal and the television signals corresponding to three scanning lines in the double-scanning is detected over the preceding two fields as shown in Figure 21, which is also a conceptual diagram.

The operation of the moving picture detecting circuit 160 shown in Figure 19 will now be described with reference to Figures 20 to 22.

At the time point when a television signal corresponding to a single scanning line in the even field period, for example, television signal S44 of the second scanning line in the fourth field period as shown in Figure 20 exists at the input terminal IN of the moving picture detecting circuit 160, television signals S35 and S33 of the third and second scanning lines of the field of one field before exist at the junctions Q1 and Q2. Whereas, a block signal S23 + S24 + S25 of the second scanning line of the field of two fields before exists at the output side of the delay line 163.

The block signal S23 + S24 + S25 is supplied to the adder 167, and television signals S35 and S33 of which the levels are adjusted by the inversion attenuators 164 and 165 are also supplied to the adder 167, so that the adder 167 produces an output SM167 expressed by the following equation (2):

$$SM167 \quad = \quad \frac{S23+S24+S25}{3} \quad - \quad \frac{S35+S33}{3} \qquad \ldots(2)$$

The output from the adder 167 and the present television signal at the input terminal IN of which the level is adjusted by the attenuator 168 are supplied to the subtractor 169 with the result that the subtractor 169 produces an output D169 expressed by the following equation (3):

17

$$D169 = \frac{S44}{3} + \frac{S35+S33}{3} - \frac{S23+S24+S25}{3} \quad \ldots(3)$$

In the case of a still picture, since S44=S24, S35=S25 and S33=S23, D169=0 is satisfied.

In this way, the adder 167 generates a field difference output, and the subtractor 169 generates a frame difference output. consequently, when the output from the adder 167 is "1", the picture is judged as a moving picture (live picture), whereas when it is "0", the picture is judged as a still picture.

At the time point when a block signal of the even field period, for example, a block signal S41+S42+S43 of the first scanning line in the fourth field as shown in Figure 21 exists at the input terminal IN, television signals S33 and S31 of the second and first scanning lines in the field of one field before exist at the junctions Q1 and Q2, respectively. Also, a television signal S22 of the first scanning line in the field of two fields before exists at the output side of the delay line 163. Television signals S33, S31 and S22 are adjusted in level by the attenuators 174, 175 and 176 and then fed to the adder 177 which therefore produces an output SM177 expressed by the following equation (4):

$$SM177 = \frac{S22+S31+S33}{3} \quad \ldots(4)$$

The output from the adder 177 and the present block signal S41+S42+S43 at the input terminal IN are supplied to the subtractor 179, so that the subtractor 179 produces an output D179 expressed by the following equation (5):

$$D179 = \frac{S41+S42+S43}{3} - \frac{S22+S31+S33}{3} \quad \ldots(5)$$

In the case of a still picture, since S41=S31, S42=S22 and S43=S33, D179=0 is satisfied.

In this way, the subtractor 179 produces the field difference output and the frame difference output. Thus, when the output from the subtractor 179 is "1", the television signal is judged as a moving picture whereas when it is "0", the television signalis judged as a still picture.

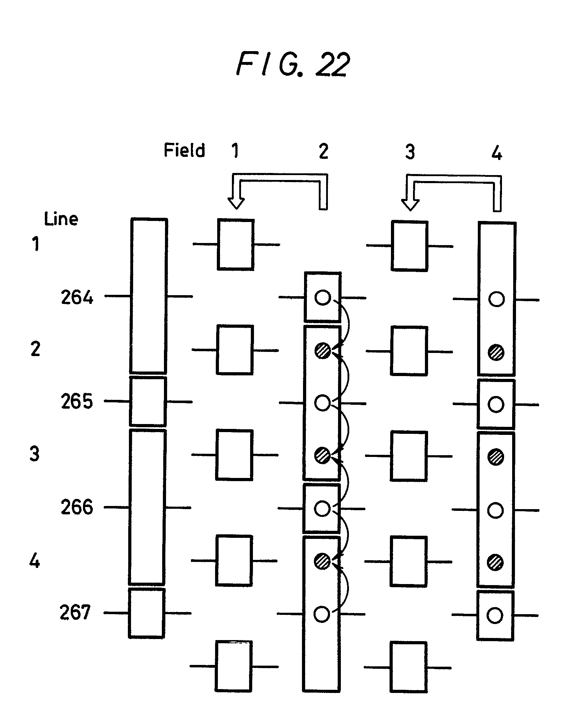

The above-mentioned outputs (moving picture detecting signals) from the subtractors 169 and 179 are switched at every scanning line of the even field by the change-over switch 170, and then fed to the double-scanning processor circuit 181 and the maximum value selector circuit 182. In the maximum value selector circuit 182, the larger of detecting signals of the present scanning line and the moving picture detecting signal of the present scanning line and the moving picture detecting signal of the preceding scanning line is selected as shown by open circles shown in Figure 22, and the selected moving picture detecting signal is used as a moving picture detecting signal of the interpolated scanning line as shown by solid circles in Figure 22. The moving picture detecting signal of the interpolated scanning line becomes "1" when the moving picture detecting signal of one of the upper and lower scanning lines is "1". In the double-scanning processor circuit 181, the signal is processed in such a fashion that the moving picture detecting signal of the present scanning line supplied to the first input terminal 181a thereof and the moving picture detecting signal of the interpolated scanning line supplied to the second input terminal 181b thereof are generated alternately.

Moreover, in this embodiment, since the block signal is transmitted only in the even field period as described before, as he moving picture detecting signal of the odd field period, a moving picture detecting signal of the succeeding even field is directly employed as shown by open arrows in Figure 22.

However, since such signal processing is impossible in a practical circuit, the output from the double-scanning processor circuit 181 is delayed by the delay time corresponding to one field period by the delay time 185 in this embodiment.

At the same time, the luminance signal supplied from the colour signal eliminating circuit 150 in Figure 18 to the scan converter circuit 130Y of Figure 17 is delayed by one field period.

A standard luminance signal used for the moving picture and the colour signal for the moving picture and the still picture are similarly delayed by the delay time corresponding to one field period.

As described, with this embodiment, the field difference output can be obtained by using the signal of one block and the moving picture can be detected with high accuracy.

A further embodiment of the invention will now be described.

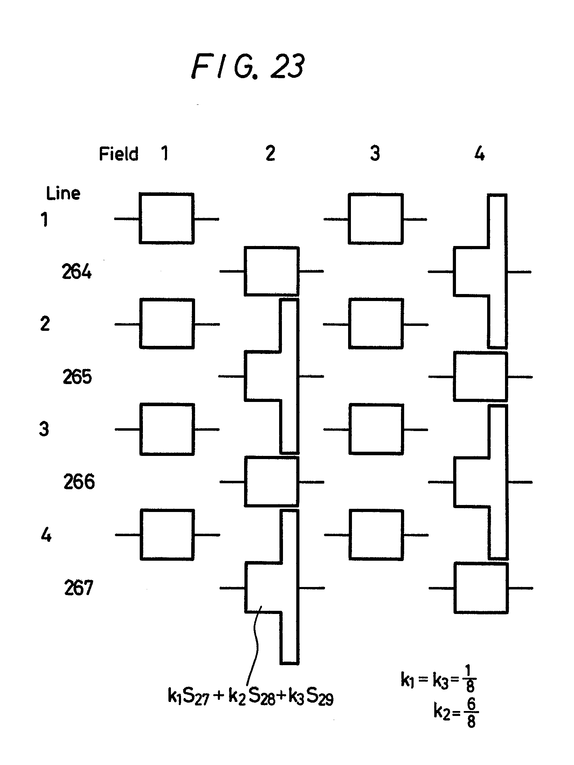

While the block signal of the even field period is formed by equally integrating television signals corresponding to the three scanning lines of the double-scanning in the afore-mentioned embodiment, it is possible to form the block signal of the even field period by weighting the television signals corresponding to the three scanning lines as shown in Figure 23.

In this embodiment, the block signal is formed as, for example, (S27+6S28+S29)/8. In this case, the attenuation factors of the respective attenuators shown in Figures 14, 17 and 19 become k1=1/8, k2=6/8 and

18

**0 256 860**

k3 = 1/8, and the amplification factor of the amplifier 139 in Figure 17 is 1/k2 = 8/6.

Accordingly, the line flicker occuring on the reproduced picture of an existing television receiver can be substantially reduced, and the viewing substantially improved.

In the embodiments, as described above in detail, since the television signals corresponding to the plurality of scanning lines which are sequential in the vertical direction are composed into a single block signal of one field and alternately transmitted as a plurality of block signals over a plurality of other fields which are sequential from a time standpoint, with compatibility for the existing standard television signal transmitting system, a moving picture can be detected accurately and the block scanning can be properly converted into the sequential scanning without deteriorating the picture quality of the reproduced picture. Thus, the vertical resolution of the reproduced picture can be improved and the line flicker occurring in the reproduced picture by the television receiver of the existing television signal transmitting system can be eliminated.

**Claims**

1. A television signal processing system comprising:
means (1) for receiving a television signal having a plurality of scanning lines;
characterized by:
means (10) for composing a predetermined number of scanning lines in one field and transmitting the composed output as one scanning line of said one field; and
means (10) for dividing said predetermined number of scanning lines in another field corresponding to said predetermined number of scanning lines in said one field into a plurality of groups and transmitting outputs from said groups as a plurality of scanning lines of said other field.

2. A system according to claim 1 wherein said received television signal is non-interlaced and a television signal to be transmitted is interlaced.

3. A system according to claim 2 wherein said received television signal is an output from a sequentially-scanning television camera (1).

4. A system according to claim 2 further comprising means (6) for receiving said transmitted television signal and scan-converting it into a non-interlaced signal, and means (6) for monitoring said non-interlaced signal by a double-scanning monitor (30).

5. A system according to claim 4 wherein said transmitted television signal is a luminance signal in a lower frequency band.

6. A system according to claim 4 further comprising means (30) for detecting movement in said transmitted television signal, and means (30) for interpolating said transmitted television signal in accordance with an output from said movement detecting means.

7. A system according to claim 6 wherein said interpolating means (30) interpolates said transmitted television signal on the basis of the signals within one field having said transmitted television signal when movement is detected by said movement detecting means (30).

8. A system according to claim 6 wherein said interpolating means (30) interpolates said transmitted television signal on the basis of the signals of a plurality of sequential fields when movement is not detected by said movement detecting means (30).

9. A system according to claim 1 wherein a pattern of composing and dividing said predetermined number of scanning lines is repeated cyclically at a predetermined number of fields.

10. A system according to claim 1 wherein said other field comprises a plurality of sequential fields.

11. A system according to claim 10 wherein the ratio of composing said predetermined number of said scanning lines is varied by the position of said scanning lines.

12. A method of processing a television signal, the method comprising the steps of:
receiving a television signal having a plurality of scanning lines;
composing a predetermined number of scanning lines in one field and transmitting the composed output as one scanning line of said one field; and
dividing said predetermined number of scanning lines in another field corresponding to said predetermined number of scanning lines in said one field into a plurality of groups and transmitting outputs from said groups as a plurality of scanning lines of said other field.

13. A method according to claim 12 wherein said received television signal is non-interlaced and a television signal to be transmitted is interlaced.

19

0256860

## FIG. 1A

$\frac{1}{60}$ sec.

## FIG. 1B

$\frac{1}{60}$ sec.

0256860

FIG. 2A

FIG. 2B

*FIG. 3A*

$\frac{1}{30}$ sec.

*FIG. 3B*

$\frac{1}{60}$ sec.

*FIG. 3C*

$\frac{1}{60}$ sec.

0256860

## FIG. 4A

$\frac{1}{60}$ sec.

## FIG. 4B

$\frac{1}{60}$ sec.

FIG. 5

FIG. 6

FIG. 7A

| $S_{11}$ | $S_{12}$ | $S_{13}$ | $S_{14}$ | $S_{15}$ | $S_{16}$ | $S_{17}$ | $S_{18}$ |

FIG. 7B  ←1Hh→

| $S_{11}$ | $S_{12}$ | $S_{13}$ | $S_{14}$ | $S_{15}$ | $S_{16}$ | $S_{17}$ |

FIG. 7C  ←1Hh→

| $S_{11}$ | $S_{12}$ | $S_{13}$ | $S_{14}$ | $S_{15}$ | $S_{16}$ |

$t_0$  $t_1$  $t_2$  $t_3$  $t_4$  $t_5$  $t_6$

FIG. 7D

$S_{11}$    $S_{12}+S_{13}$    $S_{14}+S_{15}+S_{16}$    $S_{17}$

FIG. 7E

$S_{11}$    $S_{14}+S_{15}+S_{16}$    $S_{12}+S_{13}$

FIG. 8

0256860

0256860

**FIG. 9A**

| $S_1$ | $S_2+S_3$ | $S_4+S_5+S_6$ | $S_7$ | $S_8+S_9$ | $S_{10}+S_{11}+S_{12}$ | $S_{13}$ |

$t_0$  $t_1$  $t_2$  $t_3$  $t_4$  $t_5$  $t_6$

**FIG. 9B**

| $S_1$ | $S_2+S_3$ | $S_4+S_5+S_6$ | $S_7$ | $S_8+S_9$ | $S_{10}+S_{11}+S_{12}$ |

**FIG. 9C**

| $S_1-S_2+S_3$ | $S_4+S_5$ | $S_6$ | $S_7+S_8+S_9$ | $S_{10}+S_{11}$ | $S_{12}$ |

**FIG. 9D**

| $S_1+S_2+S_3$ | $S_4+S_5$ | $S_6$ | $S_7+S_8+S_9$ | $S_{10}+S_{11}$ |

**FIG. 9E**

| $S_3$ | $S_4+S_5+S_6$ | $S_7+S_8$ | $S_9$ | $S_{10}+S_{11}+S_{12}$ | $S_{13}+S_{14}$ |

**FIG. 9F**

| $S_1+S_2$ | $S_3$ | $S_4+S_5+S_6$ | $S_7+S_8$ | $S_9$ | $S_{10}+S_{11}+S_{12}$ |

**FIG. 9G**

| $S_1+S_2+S_3$ | $S_4$ | $S_5+S_6$ | $S_7+S_8+S_9$ | $S_{10}$ | $S_{11}+S_{12}$ |

**FIG. 9H**

| $S_1+S_2+S_3$ | $S_4$ | $S_5+S_6$ | $S_7+S_8+S_9$ | $S_{10}$ |

← 1H →

**FIG. 9J**

| $S_1$ | $S_3$ | $S_5$ | $S_7$ | $S_9$ |

**FIG. 9K**

| $S_2$ | $S_4$ | $S_6$ | $S_8$ | $S_{10}$ |

← 1H →

**FIG. 9L** {

$S_1$  $S_5$

$S_3$  $S_7$

**FIG. 9M** {

$S_2$  $S_6$

$S_4$  $S_8$

← 1H →

**FIG. 9N**

| $S_1$ | $S_2$ | $S_3$ | $S_4$ | $S_5$ | $S_6$ | $S_7$ | $S_8$ |

0256860

FIG. 10

0256860

FIG. 11A

FIG. 11B

F I G. 12

# FIG. 13

FIG. 14

110Y

$k_1 = k_2 = k_3 = \frac{1}{3}$

FIG. 15

110C

0256860

*F I G. 16A*  S₁  S₂  S₃  S₄  S₅  S₆  S₇  S₈  S₉

*F I G. 16B*  |←1Hh→|  S₁  S₂  S₃  S₄  S₅  S₆  S₇  S₈

*F I G. 16C*  |←1Hh→|  S₁  S₂  S₃  S₄  S₅  S₆  S₇

$t_0$  $t_1$  $t_2$  $t_3$  $t_4$  $t_5$  $t_6$  $t_7$  $t_8$

*F I G. 16D*  S₁+S₂+S₃  S₃+S₄+S₅  S₅+S₆+S₇  S₇+S₈+S₉

S₂+S₃+S₄  S₄+S₅+S₆  S₆+S₇+S₈

*F I G. 16E*  S₁  S₃  S₅  S₇

*F I G. 16F*  S₁  S₃  S₅  S₇

*F I G. 16G*  S₂  S₃+S₄+S₅  S₆  S₇+S₈+S₉

*F I G. 16H*  S₂  S₃+S₄+S₅  S₆  S₇+S₈+S₉

*F I G. 16J*  S₁+S₂+S₃  S₄  S₅+S₆+S₇  S₈

*F I G. 16K*  S₁+S₂+S₃  S₄  S₅+S₆+S₇  S₈

FIG. 17

130Y

FIG. 18

FIG. 19

0256860

# FIG. 20

0256860

# FIG. 21

0256860

FIG. 22

0256860

## FIG. 23

$$k_1 S_{27} + k_2 S_{28} + k_3 S_{29}$$

$$k_1 = k_3 = \frac{1}{8}$$
$$k_2 = \frac{6}{8}$$